(19) Europäisches Patentamt
European Patent Office
Office européen des brevets

(11) EP 2 647 483 B1

# (12) EUROPEAN PATENT SPECIFICATION

(45) Date of publication and mention
of the grant of the patent:
**06.09.2017 Bulletin 2017/36**

(21) Application number: **11844709.3**

(22) Date of filing: **29.11.2011**

(51) Int Cl.:
*B29C 47/92* (2006.01)       *C08L 23/00* (2006.01)
*C08L 77/06* (2006.01)       *B29C 47/38* (2006.01)
*B65D 1/00* (2006.01)
*B29C 47/60* (2006.01)       *B65D 65/40* (2006.01)
*B29C 49/00* (2006.01)       *B29C 47/82* (2006.01)

(86) International application number:
**PCT/JP2011/077563**

(87) International publication number:
**WO 2012/073969 (07.06.2012 Gazette 2012/23)**

(54) **MOLDED ARTICLE HAVING EXCELLENT FUEL BARRIER PROPERTIES**

FORMARTIKEL MIT HERVORRAGENDEN BRENNSTOFFBARRIEREEIGENSCHAFTEN

ARTICLE MOULÉ AYANT D'EXCELLENTES PROPRIÉTÉS DE BARRIÈRE AUX COMBUSTIBLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2010 JP 2010267650**

(43) Date of publication of application:
**09.10.2013 Bulletin 2013/41**

(73) Proprietor: **Mitsubishi Gas Chemical Company,
Inc.
Tokyo 100-8324 (JP)**

(72) Inventors:
• **KOUNO, Kenji
Hiratsuka-shi
Kanagawa 254-0016 (JP)**
• **OTAKI, Ryoji
Hiratsuka-shi
Kanagawa 254-0016 (JP)**

(74) Representative: **Vossius & Partner
Patentanwälte Rechtsanwälte mbB
Siebertstrasse 3
81675 München (DE)**

(56) References cited:
EP-A1- 1 108 653       EP-A1- 1 548 059
EP-A1- 2 082 861       EP-A2- 0 706 873
WO-A1-2010/034515     JP-A- 4 031 010
JP-A- 4 047 918        JP-A- 4 363 225

JP-A- 2005 096 123     JP-A- 2007 177 208
JP-A- 2010 125 729     JP-A- 2011 162 684

• Anonymous: "MULTILAYER CONTAINERS
FEATURING NANO-NYLON MXD6 BARRIER
LAYERS WITH SUPERIOR PERFORMANCE AND
CLARITY INTRODUCTION", Nova Pack America
2003, 13th annual conference on polyester
containers for food and beverages, 3 February
2003 (2003-02-03), pages 1-10, XP055156646,
Orlando, FL Retrieved from the Internet:
URL:http://web.archive.org/web/20070821131
155/http://www.nanocor.com/tech_papers/NOV
APACK03.pdf [retrieved on 2014-12-04]
• Tie Lan ET AL: "Nanocomposite Materials for
Nanocomposite Materials for Packaging Film
Applications Packaging Film Applications", , 30
April 2009 (2009-04-30), XP055156244, TAPPI
Flexible Packaging Summit 2009, Columbus,
Ohio, USA Retrieved from the Internet:
URL:http://www.tappi.org/content/events/09
PLACESY/Symp_Papers/lan.pdf [retrieved on
2014-12-02]
• Giles, Harold F. Jr.; Wagner, John R. Jr.; Mount,
Eldridge, M. III: "Extrusion - The Definitive
Processing Guide and Handbook", 10 November
2005 (2005-11-10), William Andrew
Publishing/Plastics Design Library,
XP002733366, ISBN: 978-0-8155-1473-2 page
14,61, * pages 14,61 *

**(Cont. next page)**

- Peter Fischer ET AL: "Ideen mit Zukunft - Einschneckenextruder und Barriereschnecken", VDI-Tagung "Der Einschneckenextruder - Grundlagen und Systemoptimierung", 1 January 1997 (1997-01-01), pages 1-17, XP055264305, Baden-Baden Retrieved from the Internet: URL:http://www.eta-gmbh.de/pdf-Dateien/Downloads/98_DE_Einschneckenextruder.pdf [retrieved on 2016-04-11]
- SANDEEP TYAGI ET AL: "Morphology development during blending of immiscible polymers in screw extruders", POLYMER ENGINEERING AND SCIENCE., vol. 42, no. 6, 1 June 2002 (2002-06-01), pages 1309-1321, XP055264458, US ISSN: 0032-3888, DOI: 10.1002/pen.11033

**Description**

TECHNICAL FIELD

The present invention relates to a method for producing a! molded article having excellent fuel barrier properties.

BACKGROUND ART

In recent years, a fuel container composed of a resin manufactured by blow molding or the like has drawn attention as a fuel storage container from the aspects of saving the weight, eliminating rust prevention treatment, improving the degree of freedom of shape, reducing process man hours, automating manufacturing, and the like. This has propelled metallic fuel storage containers to be replaced with resin ones.

Many of fuel storage containers are composed of high density polyethylene (hereafter referred to as "HDPE"), which has excellent machine strength, formability, and economic efficiency but poor fuel barrier performance against fuel filled in the containers. On the other hand, the fuel permeability regulation on resin containers is being tightened every year from the viewpoint of prevention of environmental pollution. The fuel barrier performance required by fuel permeability regulation is hardly provided to containers composed of HDPE (hereafter referred to as "HDPE container"). Therefore, technology to improve fuel barrier properties is strongly desired.

As one of the methods of improving the fuel barrier properties of an HDPE container, the method of subjecting the inner surface of an HDPE container to chlorofluorocarbon or sulfone treatment is known (see Patent document 1). This method has the advantage that the facility at which HDPE containers have been conventionally manufactured can be used as it is. However, this method has the disadvantages including that safety should be secured for handling of toxic gas during fluorine treatment, that the cost of collecting toxic gas is high after the treatment, and that quality inspection time is required for fluorinated HDPE containers.

The method of forming the cross-sectional structure of an HDPE container into a multilayer structure by laminating a resin with fuel barrier properties such as an ethylene vinyl alcohol copolymer resin (hereafter referred to as "EVOH") on the interlayer of the HDPE container is known (see Patent document 2). According to this method, an HDPE container on which an EVOH layer is laminated can have more excellent fuel barrier properties than a conventional HDPE container. Furthermore, the thickness of an EVOH layer laminated on the interlayer of an HDPE container can control the fuel barrier performance of the container so as to easily manufacture a container with desired fuel barrier performance.

However, in the facility at which HDPE containers have been manufactured in the past, this method cannot be used to manufacture an HDPE container on which an EVOH layer is laminated. Specifically, equipment of manufacturing an HDPE container on which an EVOH layer is laminated should be provided with a multilayer blow molding machine with at least three or more extruders extruding HDPE, an adhesive resin, and EVOH respectively to the inside of an HDPE container. This increases the cost of equipment of manufacturing an HDPE container on which an EVOH layer is laminated.

Generally, in a container manufactured by direct blow molding, the part caused by pinching off a parison with a mold, which is referred to as "pinch-off part," inevitably remains. Then, in the multilayer container, a matching face of the inner layer of HDPE is generated on the cross section of the pinch-off part, causing a part in which the EVOH layer is cut. A thin container has an extremely thin matching face of the inner layer of HDPE at the pinch-off part, hardly causing fuel to virtually penetrate through the matching face. However, in a container required to have high strength as a fuel container, the inner layer of HDPE is generally thicker. As the inner layer of HDPE is thicker, fuel more easily penetrates through the matching face.

As another method of improving the fuel barrier properties of an HDPE container, the method of manufacturing a single-layer container from the composition in which a polyamide resin such as nylon 6 is blended with an adhesive resin and HDPE is known (see Patent documents 3 and 4) . According to this method, the facility at which a conventional HDPE container has been manufactured can be used almost as it is. Furthermore, an HDPE container can have fuel barrier properties similar to those with a multilayer structure by dispersing a polyamide resin in the composition in the form of flakes, i.e. lines seen in the cross section of the molded article. Since the resin materials composing an HDPE container are the same as those composing remaining materials and purged materials generated while the HDPE container is manufactured, the resin materials of the HDPE container, in contrast to those of a fluorinated container, can be grinded with a disintegrator, fed to an extruder as recycled materials, and then be recycled as one of the materials composing a container. Through the use of this method and the application of the composition in which the polyamide resin, an adhesive resin, and HDPE are blended instead of HDPE in the inner layer of the multilayer container, fuel penetration through the matching face of the inner layer of HDPE at the pinch-off part can be reduced.

Among polyamide resins, particularly, poly metaxylylene adipamide, the major components of which are metaxylylene diamine and adipic acid, is a material with excellent gas barrier properties against oxygen, carbon dioxide, and the like and with excellent resistance to various organic solvents compared with other polyamides. This material can easily provide a container with more excellent fuel barrier properties than nylon 6 (See Patent documents 5 and 6). However, the melting point of poly metaxylylene adipamide is often higher than the process temperature for manufacturing an HDPE container. For this reason, the range of the molding process condition for dispersing poly metaxylylene adipamide in the composition in the form of flakes and for preventing HDPE from deteriorating during melt processing tends to be narrow. Therefore, when the molding process conditions such as the extruder temperature and the extruder speed some fluctuates, the dispersed state of polymetaxylylene adipamide in the composition is changed. This occasionally causes the fuel barrier performance of the obtained molded article to vary. To manufacture an article providing stable performance, the molding condition during manufacturing has to be managed, the quality of an obtained article is inspected in detail, and an obtained article has to be checked on each molding to determine if the article provides stable performance. Based on this, it cannot be said that the productivity is high.

Citation List

    Patent document 1: JP60-6735 A
    Patent document 2: JP6-328634 A
    Patent document 3: JP55-121017 A
    Patent document 4: JP58-209562 A
    Patent document 5: JP2005-206806 A
    Patent document 6: JP2007-177208 A

DISCLOSURE OF THE INVENTION

An objective of the present invention is to provide a method of stably manufacturing a molded article such as a sheet or a hollow container with fuel barrier properties, in which the molded article is composed of a resin composition generated by melting and mixing a polyolefin, an adhesive polyolefin, and a metaxylylene group-containing polyamide.

To solve the above-mentioned problems, the inventors extensively studied on the screw shape and the cylinder temperature setting range of a single shaft extruder melting and mixing resin materials for manufacturing a molded article including a resin composition generated by melting and mixing a polyolefin, an adhesive polyolefin, and a metaxylylene group-containing polyamide. As a result, the inventors have found that (1) with an extruder in which a screw is inserted, in which the proportion of the lengths of the feeding part, the compressing part, and the measuring part that compose the screw shape falls within a specific range, the molded article is easily obtained by extrusion molding under a specific set of manufacturing conditions of (2) the cylinder temperature setting and (3) the shear rate of the screw. The inventors have also found that this molded article has high fuel barrier properties because a metaxylylene group-containing polyamide resin is dispersed in a resin composition composing the molded article in the form of flakes. Then, the present invention is achieved.

The present invention provides a method for producing a molded article including a resin composition, the resin composition being generated by using a single shaft extruder satisfying the following condition (1), and by melting and mixing a raw mixture under the following conditions (2) and (3), the raw mixture being obtained by blending 40-90 parts by mass of a polyolefin (A), 3-30 parts by mass of a metaxylylene group-containing polyamide (B), and 3-50 parts by mass of an adhesive polyolefin (C).

(1) The single shaft extruder includes:

    a screw having a screw shaft and a threading part spirally formed on the side of the screw shaft, the threading part conveying the resin composition from the base end to the top end of the screw shaft by rotating the screw shaft;
    a cylinder having an inner circumferential face with a cylindrical inner face shape, in the cylinder the screw being inserted rotatably;
    a plurality of temperature controllers adjusting the temperature of the resin composition conveyed from the base end to the top end by rotating the screw; and
    a screw drive rotating the screw at a predetermined shear rate,
    the screw shaft includes: a feeding part being a part in which the screw channel depth between the tip end of the threading part and the surface of the screw shaft from the base end to the top end of the screw shaft is constant; a compressing part following the feeding part, the compressing part being a part in which the screw channel depth is gradually shorter; and a measuring part following the compressing part, the measuring part being a part in which the screw channel depth is shorter and constant than that of the feeding part,
the ratio of the length of the feeding part to the screw effective length of the screw shaft falls within the range of 0.43 -0.55, the ratio of the length of the compressing part to the screw effective length falls within the range of 0.20-0.30, the ratio of the length of the measuring part to the screw effective length falls within the range of 0.20-0.40, and the sum of the ratios is 1.0.

(2) The upper limit of the cylinder temperature of the feeding part falls within the range of from 4°C to a temperature which is 20 °C higher than the melting point of the metaxylylene group-containing polyamide (B), and the cylinder temperatures of the compressing part and the measuring part fall within the range off from (i) a temperature which is 30°C lower than the melting-point of the metaxylylene group-containing polyamide (B) to (ii) a temperature which is 20°C higher than the melting point of the metaxylylene group-containing polyamide (B).

(3) The predetermined shear rate is 14/second or more.

Through the use of the manufacturing method of the present invention, a molded article with high fuel barrier properties can easily be obtained because a Metaxylylene group-containing polyamide is dispersed in a resin composition composing the molded article in the form of flakes.

The molded article obtained by the manufacturing method of the present invention has excellent fuel barrier performance and shows small variations in the lot and among the lots, which can be used as a container for fuel, chemical, pesticide, beverage, or the like.

BRIEF DESCRIPTION OF THE DRAWINGS

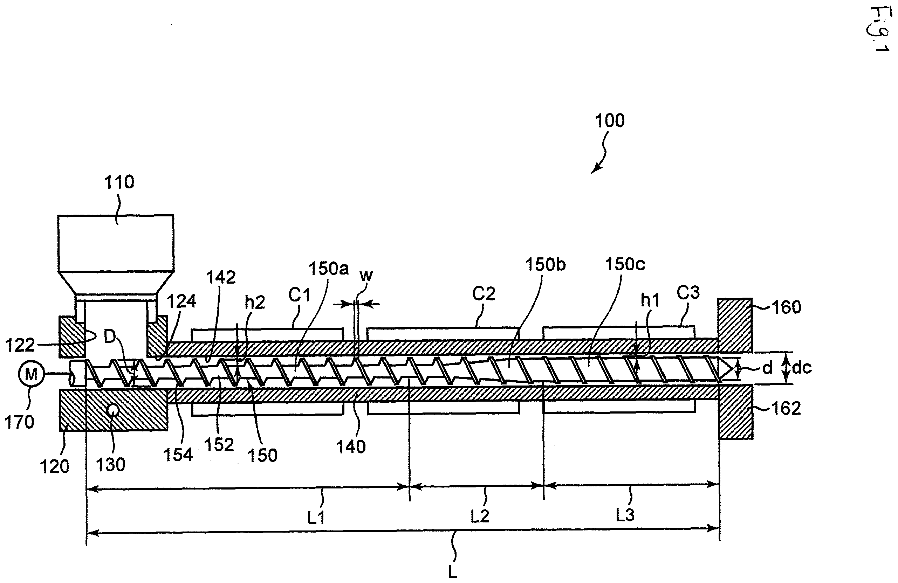

Fig.1 shows a vertical cross-sectional view illustrating the total construction of a first example of the present invention.

PREFERRED MODE FOR CARRYING OUT THE INVENTION

The polyolefin (A) used in the present invention is a main material composing the molded article. As the main material, any materials can be used without limitation as long as used as a material composing the molded article. The main material includes polyethylenes exemplified by a low density polyethylene, a medium density polyethylene, a high density polyethylene, and a linear low density polyethylene; polypropylenes exemplified by a propylene homopolymer, an ethylene-propylene block copolymer, and an ethylene-propylene random copolymer; homopolymers of ethylene hydrocarbons with two or more carbon atoms such as 1-polybutene and 1-polymethylpentene; homopolymers of $\alpha$-olefins with 3-20 carbon atoms; copolymers of $\alpha$-olefins with 3-20 carbon atoms; and copolymers of an $\alpha$-olefin with 3-20 carbon atoms and a cyclic olefin. The main material is more preferably a polyethylene and a polypropylene, further more preferably a high density polyethylene (HDPE). These polyolefins can be used alone as the main material of the molded article or can be used as a mixture in combination of two or more.

The polyolefin used in the present invention has preferably high melting viscosity to prevent the parison from the drawdown causing the uneven thickness of the molded article. Similarly, the sheet also has preferably high melting viscosity to prevent the drawdown. Specifically, the melt flow rate (MFR) falls within the range of preferably 0.03 g/10 minutes or more (load: 2.16 kgf, temperature: 190 °C) and 2 g/10 minutes or less (load: 2.16 kgf, temperature: 190 °C), more preferably 0.15 g/10 minutes or more (load: 2.16 kgf, temperature: 190 °C) and 1 g/10 minutes or less (load: 2.16 kgf, temperature: 190 °C), further more preferably 0.2 g/10 minutes or more (load: 2.16 kgf, temperature: 190 °C) and 0.8 g/10 minutes or less (load: 2.16 kgf, temperature: 190 °C). Through the use of polyolefins showing MFR falling within the above-mentioned range, a molded article with small drawdown and controlled thickness can easily be obtained. The metaxylylene group-containing polyamide (B) is easily dispersed in the resin composition in the form of flakes so that the molded article can have excellent fuel barrier properties.

The metaxylylene group-containing polyamide (B) used in the present invention contains a diamine unit including 70 mol% or more of a metaxylylene diamine unit and a dicarboxylic acid unit including 50 mol% or more of an adipic acid unit. The metaxylylene group-containing polyamide (B) used in the present invention may further contains other structural units without undermining the effect of the present invention. In the present invention, a unit induced from dicarboxylic acid and a unit induced from diamine are referred to as "dicarboxylic acid unit" and "diamine unit" respectively.

The diamine unit in the metaxylylene group-containing polyamide (B) contains 70 mol% or more, preferably 80 mol% or more, more preferably 90 mol% or more of a metaxylylene diamine unit, from the viewpoint of improving the fuel barrier properties of the molded article. When the content of the metaxylylene diamine unit of a diamine unit is 70 mol% or more, the fuel barrier properties of a molded article composed of the obtained resin composition can be efficiently improved.

A compound capable of composing a diamine unit other than the metaxylylene diamine unit in the metaxylylene group-containing polyamide (B) used in the present invention includes an aromatic diamine such as p-xylylenediamine; alicyclic diamines such as 1,3-bis(aminomethyl)cyclohexane, 1,4-bis(aminomethyl)cyclohexane, and tetramethylenediamine; and aliphatic diamines such as hexamethylenediamine, nonanemethylenediamine, 2-methyl-1,5-pentanediamine but is not limited thereto. These can be used alone or in combination of two or more.

The dicarboxylic acid unit composing the metaxylylene group-containing polyamide (B) contains 50 mol% or more , preferably 60 mol% or more, more preferably 70 mol% or more of an $\alpha,\omega$-aliphatic dicarboxylic acid unit, from the viewpoints of preventing the crystallinity of the metaxylylene group-containing polyamide (B) from excessively decreasing and of enhancing the fuel barrier performance of the molded article.

A compound capable of composing an $\alpha, \omega$-aliphatic dicarboxylic acid unit includes suberic acid, adipic acid, azelaic acid, sebacic acid, and dodecanoic acid. Due to the excellent performance to maintain good fuel barrier properties and crystallinity, adipic acid and sebacic acid are preferable, and particularly, adipic acid is preferably used.

A compound capable composing a dicarboxylic acid unit other than an $\alpha, \omega$-aliphatic dicarboxylic acid unit includes alicyclic dicarboxylic acids such as 1,3-cyclohexanedicarboxylic acid and 1,4-cyclohexanedicarboxylic acid; aromatic dicarboxylic acids such as terephthalic acid, isophthalic acid, o-phthalic acid, xylylene dicarboxylic acid, and napthalenedicarboxylic acid but is not limited thereto. Particularly, isophthalic acid and 2, 6-napthalenedicarboxylic acid are preferable because these acids can easily provide a polyamide with excellent fuel barrier properties without inhibiting polycondensation reaction during the generation of the metaxylylene group-containing polyamide (B).

The content of an isophthalic acid unit and/or a 2, 6-napthalenedicarboxylic acid unit is preferably 30 mol% or less, more preferably 20 mol% or less, further more preferably 15 mol% or less based on the dicarboxylic acid unit. The content of an isophthalic acid unit and a 2,6-napthalenedicarboxylic acid unit falling within the above-mentioned range enables the dispersed state of the metaxylylene group-containing polyamide (B) in the resin composition to be constant so that fuel barrier performance can be provided to the molded article.

Besides the diamine unit and the dicarboxylic acid unit, as a copolymerized unit composing the metaxylylene group-containing polyamide (B), lactams such as $\varepsilon$-caprolactam and laurolactam; aliphatic amino carboxylic acids such as aminocaproic acid and amino undecanic acid; and an aromatic amino carboxylic acid such as p-aminomethyl benzoic acid can be used without undermining the effect of the present invention.

The metaxylylene group-containing polyamide (B) is produced by melt condensation polymerization (melt polymerization). For example, a nylon salt composed of diamine and dicarboxylic acid is heated in the presence of water under increased pressure and then polymerized in the melt state while the added water and the condensation water are removed. Alternatively, the metaxylylene group-containing polyamide (B) is produced by directly adding diamine in melted dicarboxylic acid through condensation polymerization. In this case, to maintain the reaction system in a homogeneous liquid is continuously added in dicarboxylic acid, during which the mixture is heated without the temperature of the reaction system falling below the melting point of the oligoamide and the polyamide to be generated to promote the condensation polymerization.

In the condensation polymerization system for generating the metaxylylene group-containing polyamide (B), a phosphorus atom-containing compound may be added to achieve effects on the promotion of amidation reaction and on the prevention of coloring during the condensation polymerization. The phosphorus atom-containing compound includes phosphinic acid compounds such as dimethylphosphinic acid and phenylmethyl phosphinic acid; hypophosphite compounds such as hypophosphorous acid, sodium hypophosphite, potassium hypophosphite, lithium hypophosphite, and ethyl hypophosphite; phosphonite compounds such as phenyl phosphonous acid, sodium phenyl phosphonite, potassium phenyl phosphonite, lithium phenyl phosphonite, and ethyl phenyl phosphonite; phosphonate compounds such as phenylphosphonic acid, ethyl phosphonic acid, sodium phenyl phosphonate, potassium phenyl phosphonate, lithium phenyl phosphonate, diethyl phenyl phosphonate, sodium ethyl phosphonate, and potassium ethyl phosphonate; phosphite compounds such as phosphorous acid, sodium hydrogenphosphite, sodium phosphite, triethyl phosphite, and triphenyl phosphite; and pyrophosphorous acid. Among these, particularly metal hypophosphites such as sodium hypophosphite, potassium hypophosphite, and lithium hypophosphite are preferably used due to high effects on the promotion of amidation reaction and on the prevention of coloring. In particular, sodium hypophosphite is preferable. However, the phosphorus atom-containing compound that can be used in the present invention is not limited to these compounds.

The additive amount of the phosphorus atom-containing compound added in the condensation polymerization system for generating the metaxylylene group-containing polyamide (B) is preferably 1-1000 ppm, more preferably 1-500 ppm, further more preferably 5-450 ppm, particularly preferably 10-400 ppm, equivalent to the concentration of phosphorus atoms in the metaxylylene group-containing polyamide (B). Setting the additive amount of the phosphorus atom-containing compound to within the above-mentioned range can prevent the xylylene group-containing polyamide (B) from being colored during the condensation polymerization.

In the condensation polymerization system for generating the metaxylylene group-containing polyamide (B), an alkali metal compound or an alkaline earth metal compound is preferably used together with the phosphorus atom-containing compound. To prevent the metaxylylene group-containing polyamide (B) from being colored during the condensation polymerization, a phosphorus atom-containing compound should be present in sufficient amount. However, in some cases, the phosphorus atom-containing compound could promote the gelation of the xylylene group-containing polyamide (B). In order to adjust the reaction rate of the amidation, an alkali metal compound or an alkaline earth metal compound preferably coexists with the phosphorus atom-containing compound. Such metal compounds includes, for example, alkali metal/alkaline earth metal hydroxides such as lithium hydroxide, sodium hydroxide, potassium hydroxide, rubidium hydroxide, cesium hydroxide, magnesium hydroxide, calcium hydroxide, and barium hydroxide; and alkali metal/alkaline earth metal acetates such as lithium acetate, sodium acetate, potassium acetate, rubidium acetate, cesium acetate, magnesium acetate, calcium acetate, and barium acetate but can be used without being limited to these compounds. When the alkali metal compound or the alkaline earth metal compound is added in the condensation polymerization system for generating the metaxylylene group-containing polyamide (B), the mole ratio of the metal compound to the phosphorus atom-containing compound is preferably 0.5-2.0, more preferably 0.6-1.8, further more preferably 0.7-1.5. Setting the additive amount of an alkali metal compound or an alkaline earth metal compound to within the above-mentioned range can achieve the effect on the promotion of amidation reaction from the phosphorus atom-containing compound and can suppress the generation of gel.

After derived and pelletized, the metaxylylene group-containing polyamide (B) obtained by the melt condensation polymerization may be dried for use or may be subjected to solid phase polymerization to further improve the polymerization degree. As a heater used for the drying or the solid phase polymerization, a continuous heated-air dryer; rotating drum heaters such as a tumble dryer, a conical dryer, and a rotary dryer; and a conical heater internally provided with a rotor blade called a nauta mixer can be suitably used. However, well-known methods and devices can be used without being limited to these heaters. In particular, when a polyamide is subjected to solid phase polymerization, a rotating drum heater among the above-mentioned devices is preferably used because this heater can seal the system and easily promote the condensation polymerization without the presence of oxygen that causes the coloring.

There are some indices of the polymerization degree of the metaxylylene group-containing polyamide (B), but relative viscosity is generally used. The relative viscosity of the xylylene group-containing polyamide is preferably 2.0-4.5, more preferably 2.1-4.1, further more preferably 2.3-4.0. Setting the relative viscosity of the xylylene group-containing polyamide to within the above-mentioned range can stabilize the molding process and can provide a molded article having excellent appearance. The relative viscosity is herein referred to as the ratio of the free-fall time t of 1 g of polyamide dissolved in 100 mL of 96% sulfuric acid to the free-fall time t0 of 96% sulfuric acid, which is represented by the following expression. The free-fall times t0 and t are of measured at 25 °C with a Cannon-Fenske viscometer.

```
Relative viscosity = t/t0
```

In the metaxylylene group-containing polyamide (B), additives such as an antioxidant, a delusterant, a heat-resistant stabilizer, a weathering stabilizer, an ultraviolet absorber, a nucleating agent, a plasticizer, a fire retardant, an antistatic agent, a color protector, a lubricant, and an antigelling agent; clay such as laminar silicate; and a nano filler can be added without undermining the effect of the present invention. To modify the metaxylylene group-containing polyamide (B), various polyamides such as nylon 6, nylon 66, and a non-crystalline nylon generated from an aromatic dicarboxylic acid monomer, and the modified resin of these polyamides; a polyolefin and the modified resin thereof; an elastomer with a styrene structure; and the like can be added as needed. However, materials to be added for this modification are not limited to the above-mentioned compounds, and various materials may be combined.

The adhesive polyolefin (C) used in the present invention can be obtained by the above-mentioned polyolefin (A) grafting-modified with an unsaturated carboxylic acid or the anhydride thereof, which is widely used as an adhesive resin in general. Specific examples of the unsaturated carboxylic acid or the anhydride thereof include acrylic acid, methacrylic acid, α-ethyl acrylic acid, maleic acid, fumaric acid, itaconic acid, citraconic acid, tetrahydro phthalic acid, chloro-maleic acid, butenyl-succinic acid and the anhydrides thereof. In particular, maleic acid and maleic anhydride are preferably used. Various known methods of grafting-copolymerizing a polyolefin with the above-mentioned unsaturated carboxylic acid or the anhydride thereof is used to obtain a modified polyolefin. For example, a polyolefin is melted with an extruder, is dissolved in a solvent, can be suspended in water, or the like, before adding a graft monomer to the polyolefin.

The adhesive polyolefin (C) has a melt flow rate (MFR) of preferably 0.01-5 g/10 minutes, more preferably 0.02-4 g/10 minute, further more preferably 0.03-3 g/10 minutes, at a load of 2.16 kgf at 190 °C. The MFR falling within the above-mentioned range allows the metaxylylene group-containing polyamide (B) to be easily dispersed in the resin composition in the form of flakes and provides a high-strength molded article with excellent adhesive strength between the polyolefin and the metaxylylene group-containing polyamide.

The amount used of the polyolefin (A) in the present invention is preferably 40-90 mass%, more preferably 50-90 mass %, further more preferably 60-80 mass % based on the total amount of the polyolefin (A), the metaxylylene group-containing polyamide (B), and the adhesive polyolefin (C). Setting the amount used of the polyolefin (A) to within the above-mentioned range can minimize the strength decrease of a molded article composed of the resin composition.

The amount used of the metaxylylene group-containing polyamide (B) in the present invention is preferably 3-30 mass%, more preferably 5-25 mass %, further more preferably 5-20 mass % based on the total amount of the polyolefin (A), the metaxylylene group-containing polyamide (B), and the adhesive polyolefin (C). Setting the amount used of the metaxylylene group-containing polyamide (B) to within the above-mentioned range can efficiently enhance the fuel barrier performance of the obtained molded article and can suppress the strength decrease to fall within a practical range.

The amount used of the adhesive polyolefin (C) in the present invention is preferably 3-50 mass%, more preferably 5-40 mass %, further more preferably 10-30 mass % based on the total amount of the polyolefin (A), the metaxylylene group-containing polyamide (B), and the adhesive polyolefin (C). Setting the amount used of the adhesive polyolefin to within the above-mentioned range can improve the adhesiveness between the polyolefin (A) and the metaxylylene group-containing polyamide (B) which have low adhesiveness and can enhance the strength of the molded article.

The use ratio of the adhesive polyolefin (C) to the metaxylylene group-containing polyamide (B) is preferably 0.8-5.0, more preferably 1.0-4.5, further more preferably 1.0-4.0, in the mass ratio. Setting the use ratio of the adhesive polyolefin (C) to within the above-mentioned range can enhance the strength of the molded article. For example, even if a hollow container that is the molded article is subjected to an impact such as a drop impact, separation on the interface between the polyolefin and the metaxylylene group-containing polyamide that are dispersed in the resin composition can be prevented to maintain the strength and the fuel barrier properties of the hollow container.

In the resin composition composing a molded article in the manufacturing method of the present invention, various copolymerized polyolefins such as a thermoplastic elastomer, EEA (ethylene-ethyl acrylate), EMA (ethylene-methylacrylate), and ionomers may be mixed, other than three components of the polyolefin (A), the metaxylylene group-containing polyamide (B), and the adhesive polyolefin (C). Furthermore, purged materials and burrs generated in the production process of the molded article as well as inferior articles that have not been manufactured as molded articles may be ground. The mixing rate of the ground materials as the content in the resin composition is preferably 60 mass% or less, more preferably 50 mass % or less, further more preferably 40 mass % or less, so as to minimize the strength decrease of the molded article. When the ground material is mixed instead of a part of the polyolefin to be used, the content rate of the metaxylylene group-containing polyamide (B) in the molded article may be increased. In this case, to prevent the strength of the molded article from substantially decreasing, the ground materials are blended so that the content of the adhesive polyolefin (C) is preferably 0.8-5.0, more preferably 1.0-4.5, further more preferably 1.0-4.0 times that of the metaxylylene group-containing polyamide (B) in the mass ratio.

The method of manufacturing a hollow container that is the molded article of the present invention preferably adopts direct blow molding. To the direct blow molding, a conventionally known method can be applied. For example, apparatus provided with an extruder, an adaptor, a cylindrical die, a mold, a cooling device, a mold clamping device, and the like is used for melting and mixing a raw mixture with the extruder, extruding a hollow parison in a certain amount from the cylindrical die through the adaptor, clamping the parison with the mold clamping device, and blowing air into and cooling the parison to form a molded article. In the apparatus, an accumulator may be used. Furthermore, a parison controller is used to extruding the parison with controlled wall thickness so that a molded article having excellent wall thickness distribution can be manufactured.

The method of manufacturing a sheet that is the molded article of the present invention preferably adopts T-die roll cooling. For example, a haul-off machine or the like provided with an extruder, an adaptor, a T-die, and a cooling roll is used for melting and mixing the raw mixture with the extruder, extruding a melted resin sheet from the T-die through the adaptor, clamping the parison with the cooling roll, transferring and cooling the sheet side on the roll side, cutting the sheet side with scissors and cutting blades to form a sheet of plate. From the sheet of plate, a molded article with a desired shape can be formed by thermoforming.

The thermoforming provides a molded article, using a preheating zone where a sheet is preheated and using a mold with the shape of the molded article, by first preheating and softening the sheet at a temperature more than the glass point, clamping the softened sheet with the mold with the shape of the molded article, and molding the sheet applied to the mold into the shape of the molded article, optionally under vacuum and compressed air, and then cooling the molded sheet.

When the raw mixture is melted and mixed with an extruder, the metaxylylene group-containing polyamide (B) absorbs heat provided from an extruder heater to be softened, receives shear stress by the screw rotation to be thinly drawn out, and then receives shear to be cut into flakes. The metaxylylene group-containing polyamide (B) cut in the form of flakes in the resin composition is uniformly dispersed in the entire resin composition (dispersion) by mixing due to the screw rotation. Then, a molded article composed of the resin composition in which the metaxylylene group-containing polyamide (B) uniformly dispersed in the form of flakes provides fuel barrier performance.

However, if receiving excessive shear stress in the resin composition, the metaxylylene group-containing polyamide (B) is not just dispersed in the form of flakes but cut into smaller particles. As a result, the fuel barrier performance of the molded article is decreased.

Therefore, the metaxylylene group-containing polyamide (B) should be designed not to be dispersed in the resin composition in the form of small particles when receiving excessive shear stress.

In the present invention, to obtain a molded article having excellent fuel barrier properties, it is important to disperse the metaxylylene group-containing polyamide (B) in the resin composition in the form of flakes. To form a molded article with stable performance at any time, the dispersed state of the metaxylylene group-containing polyamide (B) in the resin composition should not be changed even if the molding conditions some fluctuate. Then, the molding process conditions for dispersing the metaxylylene group-containing polyamide (B) in the resin composition in the form of flakes when the raw mixture is melted and mixed have been variously studied. As a result, it has been found that it is important to control the screw shape as well as the cylinder temperature setting and the shear rate which are used in a single shaft extruder.

According to the method of manufacturing a molded article including a resin composition with a single shaft extruder satisfying the following condition (1), in which the resin composition is generated by melting and mixing a raw mixture under the following conditions (2) and (3), the raw mixture being obtained by blending 40-90 parts by mass of a polyolefin (A), 3-30 parts by mass of a metaxylylene group-containing polyamide (B), and 3-50 parts by mass of an adhesive polyolefin (C), it has been found that the obtained molded article has high fuel barrier properties because the metaxylylene group-containing polyamide (B) is dispersed in a resin composition composing the molded article in the form of flakes.

(1) The single shaft extruder includes:

> a screw having a screw shaft and a threading part spirally formed on the side of the screw shaft, the threading part conveying the resin composition from the base end to the top end of the screw shaft by rotating the screw shaft;
> a cylinder having an inner circumferential face with a cylindrical inner face shape, in the cylinder the screw being inserted rotatably;
> a plurality of temperature controllers adjusting the temperature of the resin composition conveyed from the base end to the top end by rotating the screw; and
> a screw drive rotating the screw at a predetermined shear rate,
> the screw shaft includes: a feeding par being a part in which the screw channel depth between the tip end of the threading part and the surface of the screw shaft from the base end to the top end of the screw shaft is constant; a compressing part following the feeding part, the compressing part being a part in which the screw channel depth is gradually shorter; and a measuring part following the compressing part, the measuring part being a part in which the screw channel depth is shorter and constant than that of the feeding part,
> the ratio of the length of the feeding part to the screw effective length of the screw shaft falls within the range of 0.43-0.55, the ratio of the length of the compressing part to the screw effective length falls within the range of 0.20-0.30, the ratio of the length of the measuring part to the screw effective length falls within the range of 0.20-0.40, and the sum of the ratios is 1.0.

(2) The upper limit of the cylinder temperature of the feeding part falls within the range of from 4°C to a temperature which is 20 °C higher than the melting point of the metaxylylene group-containing polyamide (B), and the cylinder temperatures of the compressing part and the measuring part fall within the range of from (i) a temperature which is 30°C lower than the melting point of the metaxylylene group-containing polyamide (B) to (ii) a temperature which is 20°C higher than the melting point of the metaxylylene group-containing polyamide (B).

(3) The predetermined shear rate is 14/second or more.

The single shaft extruder used in the present invention is a single shaft extruder 100 as shown in Fig. 1. The single shaft extruder 100 is provided with a hopper 110 capable of feeding a raw mixture; a screw 150 moving as well as plasticizing and mixing the resin mixture fed to the hopper 110 to obtain a resin composition and extruding this obtained resin composition in a fixed quantity; a cylinder 140 having an inner circumferential face 142 with a cylindrical inner face shape, in the cylinder the screw 150 being inserted rotatably; a plurality of temperature controllers 120, C1, C2, and C3 heating or cooling the resin composition moving the inside of the cylinder 140 by the rotation of the screw 150 to adjust the temperature of the resin composition; a screw drive 170 rotating the screw 150 at a predetermined shear rate; and a nozzle part 160 provided with a discharge port 162 discharging the resin composition extruded by the screw 150.

The screw 150 has a screw shaft 152 and a threading part 154 spirally formed on the side of the screw shaft 152. The outer diameter D of the threading part 154 is set slightly smaller than the inner diameter of the inner circumferential face 142.

The screw shaft 152 has a feeding part 150a, a compressing part 150b following the feeding part 150a, and a measuring part 150c following the compressing part 150b, from the base end to the top end of the screw shaft 152.

The feeding part 150a is a part in which the channel depth of the screw 150 (sometime referred to as "height" or "screw depth") is constant (channel depth h2), which conveys and preheats the raw mixture. The compressing part 150b is a part in which the channel depth is gradually smaller, which applies shear to melt the raw mixture. The measuring part 150c is a part in which the channel depth of the top end of the screw is small and constant (channel depth h1), which conveys the resin composition.

In the screw shaft 152, the feeding part 150a has the length L1 (feeding length), the compressing part 150b has the length L2 (compression range), and the measuring part 150c has the length L3 (measurement length).

The screw effective length L of the present invention is of the threading part 154 of the screw 150 (from the start to the end of the thread). The screw effective length L is equal to the sum of the length L1 of the feeding part 150a, the length L2 of the compressing part 150b, and the length L3 of the measuring part 150c.

In the topmost part of the screw shaft 152 (the right end side in Fig. 1), in the following case (a), the part without the thread being formed (the right end side of the threading part 154 in Fig. 1) is included in the screw effective length L. In the following case (b), this part is not included in the screw effective length L.

(a) The diameter of the part without the thread being formed is considered to be equal to the diameter d of the screw shaft 152 corresponding to the measuring part 150c.
(b) The diameter of the part without the thread being formed is not considered to be equal to the diameter d of the screw shaft 152 corresponding to the measuring part 150c. For example, the topmost part of the screw is conical.

The hopper 110 is provided with an opening 122 capable of feeding the raw mixture from above; an insertion hole 124 formed under the opening 122, through which the base end of the screw shaft 152 is rotatably inserted; and a temperature controller 120 in which a cooling water hole 130 is formed. The temperature controller 120 is configured, for example, as a cooling part capable of circulating cooling water to the cooling water hole 130 to cool the raw mixture moved by the screw 150 near the opening 122 and to adjust the temperature of the raw mixture.

The single shaft extruder 100 used in the present invention is also provided with three heaters as temperature controllers. These three heaters are referred to as the heaters C1, C2, and C3 respectively, sequentially from the base end to the top end of the screw shaft 152.

The screw shape of the present invention will be explained below. The screw 150 of the present invention is the single shaft screw 150 in which the ratio of the length L1 of the feeding part to the screw effective length L falls within the range of 0.43-0.55, the ratio of the length L2 of the compressing part to the screw effective length falls within the range of 0.20-0.30, the ratio of the length L3 of the measuring part to the screw effective length falls within the range of 0.20-0.40, and the sum of the ratios is 1.0.

The screw shape of the present invention has a ratio of the length L1 of the feeding part 150a to the screw effective length L of 0.43-0.55, preferably 0.50-0.55.

If the ratio of the length L1 of the feeding part 150a to the screw effective length L is less than 0.40, the polyolefin (A), the adhesive polyolefin (C), and the metaxylylene group-containing polyamide (B), which are the resin materials to be used, are hardly be preheated. In particular, the metaxylylene group-containing polyamide (B) (melting point = abut 240 °C), the melting point of which is higher than polyolefin (A) (melting point = about 130 °C) is insufficiently preheated. This causes the unmelted or squashed metaxylylene group-containing polyamide to come out from the discharge port 162 of the single shaft extruder 100. If the ratio of the length L1 of the feeding part 150a to the screw effective length L is larger than 0.55, the desired lengths of the compressing part 150b and the measuring parts 150c are not obtained because the length of the cylinder 140 of the extruder 100 is limited. Therefore, the ratio of the length L1 of the feeding part 150a to the screw effective length of the present invention is 0.43-0.55.

The screw shape of the present invention has a ratio of the length L2 of the compressing part 150b to the screw effective length L of 0.20-0.30.

If the ratio of the length L2 of the compressing part 150b to the screw effective length L is more than 0.30, the resin composition receives shear stress too much, causing the metaxylylene group-containing polyamide (B) to be dispersed in the resin composition in the form of small flakes. In other words, when the resin composition composing the molded article is observed from the cross section, the metaxylylene group-containing polyamide is dispersed in the resin composition in the form of short lines, mostly particles. If such particles are dispersed, the fuel barrier properties of the obtained molded article are decreased.

If the ratio of the length L2 of the compressing part 150b to the screw effective length L is less than 0.10, shear effect is not produced when the resin composition is generated from the resin materials so that the metaxylylene group-containing polyamide (B) can not be thinly drawn out in the resin composition.

The screw shape of the present invention has a ratio of the length L3 of the measuring part 150c to the screw effective length L of 0.20-0.40.

If the ratio of the length L3 of the measuring part 150c to the screw effective length is more than 0.40, the desired lengths of the feeding part 150a and the compressing part 150b cannot be obtained. If the ratio of the length L3 of the measuring part 150c to the screw effective length L is less than 0.10, the variation of the extrusion capacity (surging phenomenon) tends to be increased, the metaxylylene group-containing polyamide (B) tends to be unevenly dispersed in the resin composition in the form of flakes, and the sizes of the flakes tend to be ununiform.

The screw shape of the present invention has a compression ratio (C/R) of preferably 2.3-3.5, more preferably 2.4-2.8.

The compression ratio (C/R) is presented by the ratio of the resin volume (volume) of one pitch of the feeding part 150a to that of one pitch of the measuring part 150c and calculated by the following expression generally.

Compression ratio=C/R

$$C/R=h2(D-h2)/(h1(D-h1))$$

h2 = channel depth of feeding part (mm)
h1 = channel depth of measuring part (mm)
D = screw diameter (mm)

The screw with a compression ratio of 2.3 or more can sufficiently melt the resin composition. As a result, the shear effect can be provided to the resin composition of the polyolefin (A), the adhesive polyolefin (C), and the metaxylylene group-containing polyamide (B). Mainly, the metaxylylene group-containing polyamide (B) is effectively and thinly drawn out. If the compression ratio is 3.5 or less, the metaxylylene group-containing polyamide (B) is dispersed in the resin composition in the form of flakes but not small particles, leading to an obtained molded article having excellent fuel barrier properties.

The channel depth in the screw shape of the present invention will be explained below.

In the screw 150 of the present invention, the channel depth in the screw shape with excellent dispersion and mixing properties is as described below. The channel depth h2 of the feeding part 150a carrying the solid raw mixture should be able to convey the resin composition of an amount corresponding to the volume of the melted resin at the measuring part 150c. However, in the light of the bulk specific gravity of the pelletized resin and the melted resin, h2 is inevitably larger than h1. If the channel depth h1 of the measuring part 150c is large, the extrusion capacity is increased without shear ability for the melting. In contrast, if the channel depth h1 of the measuring part 150c is small, the extrusion capacity is decreased.

For example, as disclosed in the document "Oshidashi Seikei (Extrusion), 7th revised edition," Editorial Supervisor: Kenkichi Murakami, the channel depth of the feeding part 150a is generally h2=(0.10-0.15)×D.

To maintain the high fuel barrier properties of a molded article manufactured by the manufacturing method of the present invention, the metaxylylene group-containing polyamide (B) should be dispersed in the resin composition in the form of flakes but should not be dispersed too much in the form of small particles. Therefore, in the present invention, the screw shape has the relatively shortened length of the compressing part that is the dispersion mixing part so as not to excessively apply shear, mixing, or dispersion. Based on the compression ratio, the channel depth h2 of the feeding part 150a can be larger than the above-mentioned general channel depth, which is preferably 0.10D-0.30D, more preferably 0.15D-0.26D.

If the channel depth h2 of the feeding part 150a is less than 0.10D, the extrusion capacity is decreased too small. In direct blow molding and the like, the fall time of parison is longer to obtain the desired parison length corresponding to the mold shape, causing a long molding cycle. If the channel depth h2 of the feeding part 150a is more than 0.30D, the extrusion capacity is increased, causing the load of the motor of the screw drive 170 to be increased. This requires an extruder motor with a higher motor capacity and easily causes the broken screw and lack of the heater capacity of the heater being corresponding to the feeding capacity of the feeding part.

As the ratio of the screw effective length L to the screw diameter D (= L/D) of the present invention is larger, the feeding part, which is the preheating zone for the resin materials, can effectively be lengthened. However, the motor capacity of the motor driving the screw is also increased, and therefore there are not much economical advantages. For this reason, the screw of the present invention has an L/D of preferably 22-32, more preferably 24-28. If the L/D is 22 or more, the metaxylylene group-containing polyamide (B) can be dispersed in the resin composition in the form of flakes. If the L/D is 32 or less, the capacity of the motor driving the screw is load without an economical problem.

The screw shape is often provided with a full flight screw on which the screw pitch constantly continues to the topmost end. To enhance the shear effect or to improve the dispersion, the measuring part is often provided with the indented part with a Dulmadge or a Maddock mixing section different from the screw shape of the feeding part.

In the present invention, any general screws can be used without limitation. However, to prevent the metaxylylene group-containing polyamide (B) from excessively and minutely dispersed in the resin composition, a screw without a Dulmadge or a Maddock mixing section, which is called a full flight screw, is preferably used. A double flight screw in which the feeding part and the compressing part have two flights may also be used.

The cylinder temperature setting of the single shaft extruder of the present invention will be explained below. The single shaft extruder used in the present invention is preferably provided with three or more heaters. When a rather large molded article is manufactured with an extruder with a small L/D of 22-24, the rotation speed of the screw of the extruder is increased to increase the discharge amount, so as to try to shorten the molding cycle. However, in this case, the residence time of a raw mixture in the extruder cylinder is shortened. This is likely to cause the raw mixture to be insufficiently preheated. Therefore, to preheat the raw mixture fed in an extruder cylinder at the feeding part of the screw, the temperature of the feeding part is preferably set high. The temperature of the compressing part is preferably set high to lower the viscosity, so as to suppress the exotherm caused by the shear of the resin. At the measuring part, the temperature is preferably set low to suppress the deterioration (yellowing and decreased physical properties) of the resin. To change the cylinder temperatures in this way, the extruder is preferably provided with three or more heaters corresponding to the feeding part, the compressing part, and the measuring part of the screw respectively. Furthermore, to set each of the temperatures of the parts of the cylinder being corresponding to the feeding part, the compressing part, and the measuring part of the screw respectively, each of which has a different length, the extruder has preferably three or more heaters.

Since the decomposition temperature of the polyolefin (A) is near the melting point of the metaxylylene group-containing polyamide (B), the range of the temperature for molding the resin composition of the present invention narrows naturally. However, setting each of the cylinder temperatures corresponding to the feeding part, the compressing part, and the measuring part of the screw respectively based on the status of the equipment and the shape of the molded article can suppress the decomposition of the polyolefin and can apply a molding process to disperse the metaxylylene group-containing polyamide (B) in the resin composition composing the molded article of the present invention in the form of flakes.

In the single shaft extruder in which the screw having the shape of the present invention is inserted, the cylinder temperature of the feeding part falls within the range of +20 °C from the melting point of the metaxylylene group-containing polyamide or less, preferably +10 °c from the melting point of the metaxylylene group-containing polyamide or less, more preferably the melting point of the metaxylylene group-containing polyamide or less; or 4 °C or more, preferably 15 °C or more, more preferably -70 °C from the melting point of the metaxylylene group-containing polyamide or more, particularly further more preferably -35 °C from the melting point of the metaxylylene group-containing polyamide or more.

When the ratio of the screw effective length L to the screw diameter D (L/D) is large, the heating zone may be partitioned in many parts as described above. In that case, the lower part of the hopper to which the resin materials are fed should be cooled with water to prevent blocking caused by the resin materials softening during the heating.

Generally, the temperature of the cylinder heating zone represented by C1 may also be set significantly low when the cylinder heating zone plays a role in only conveying and slightly preheating the raw mixture. It is determined whether or not the part expands from C1 to C2, based on the length of the heater, in other words, the number of partitions of the heating zone.

When a rather large molded article is manufactured with an extruder with a small L/D, the rotation speed of the screw of the extruder is increased to increase the discharge amount, so as to try to shorten the molding cycle. However, in this case, the residence time of a raw mixture in the extruder cylinder is shortened. This is likely to cause the raw mixture to be insufficiently preheated. Therefore, to preheat the raw mixture fed in an extruder cylinder at the feeding part of the screw, the temperature of the feeding part should be set high.

In the feeding part, the cylinder temperature setting of the part of 70 percent or more of the length from the side adjacent to the compressing part in the feeding part is set to within the range of preferably -70 °C to +20 °C, more preferably -35 °C to +20 °C from the melting point of the metaxylylene group-containing polyamide.

In the feeding part, setting the cylinder temperature of the part of 70 percent or more of the length from the side adjacent to the compressing part in the feeding part to within the range of -70 °C from the melting point of the metaxylylene group-containing polyamide or more can prevent the raw mixture from blocking and also can prevent the unmelted metaxylylene group-containing polyamide from coming out from the outlet of the extruder. In the feeding part, setting the cylinder temperature of this part to within the range of +20 °C from the melting point of the metaxylylene group-containing polyamide or less can disperse the metaxylylene group-containing polyamide in the resin composition in the form of flakes without excessive preheating the raw mixture to obtain a molded article with excellent fuel barrier properties.

The cylinder temperatures of the compressing part and the measuring part fall within the range of +20 °C, preferably +10 °C, from the melting point of the metaxylylene group-containing polyamide or less; and -30 °C, preferably -20 °C, from the melting point of the metaxylylene group-containing polyamide or more.

If the cylinder temperatures of the compressing part and the measuring part are set to less than -30 °C from the melting point of the metaxylylene group-containing polyamide, the metaxylylene group-containing polyamide tends to be unmelted.

If the cylinder temperatures of the compressing part and the measuring part are set to more than +20 °C from the melting point of the metaxylylene group-containing polyamide, the melting viscosity of the polyolefin is decreased, and then the molded article is easily yellowed. In this case, in direct blow molding for forming a container and the like, the melting viscosity of a resin that has come out from the outlet of an extruder is decreased, which causes the drawdown of parison so as to hardly obtain a desired parison diameter (width).

As described above, the single shaft extruder of the present invention is provided with three or more heaters in the cylinder to determine the set temperature based on the screw shape.

When the feeding part is included within the coverage of each heater, the set temperature of the heater falls within the range of +20 °C from the melting point of the metaxylylene group-containing polyamide or less, preferably +10 °C from the melting point of the metaxylylene group-containing polyamide or less, more preferably from the melting point of the metaxylylene group-containing polyamide or less; or 4 °C or more, preferably 15 °C or more, more preferably -70 °C from the melting point of the metaxylylene group-containing polyamide or more, further more preferably -35 °C from the melting point of the metaxylylene group-containing polyamide or more.

For the temperature setting of an extruder, the L/D of which is large enough to lengthen the feeding part, for example, at the zone C1, the heater may be turned off so as not to preheat but only to convey the raw mixture.

When the compressing part and the feeding part are included within the coverage of each heater, the set temperature of the heater falls within the range of -30 °C to +20 °C from the melting point of the metaxylylene group-containing polyamide.

When not the feeding part or the measuring part but only the compressing part is included within the coverage of each heater, the set temperature of the heater falls within the range of -30 °C to +20 °C from the melting point of the metaxylylene group-containing polyamide.

The cylinder temperatures of the feeding part, the compressing part, and the measuring part that are consecutively arranged are preferably set as follows: feeding part $\leq$ compressing part $\leq$ measuring part or feeding part $\geq$ compressing part $\geq$ measuring part.

When the set temperatures of the adaptor and the cylindrical die are set low to suppress the decreased resin viscosity by lowering the temperature of the resin, the temperature of the measuring part may be set to about 5-10 ° C lower than that of the compressing part.

The method of generating a resin composition in which the metaxylylene group-containing polyamide is dispersed in the form of flakes by melting and mixing a raw mixture in which at least three resin materials including 40-90 parts by mass of the polyolefin (A), 3-30 parts by mass of the metaxylylene group-containing polyamide (B), and 3-50 parts by mass of the adhesive polyolefin (C) are blended can be achieved by using a single shaft extruder with a screw having a screw shape within the above-mentioned scope of the present invention being inserted, with a cylinder temperature encompassed within the scope of the present invention being set, and with a shear rate of the screw being 14/second or more.

Generally, the shear action of the screw is proportional to the shear rate and represented by the following expression.

$$\gamma = \pi \times dc \times n / (60 \times h1)$$

$\gamma$ = shear rate (sec$^{-1}$ or /second)
dc = diameter of cylinder (mm)
n = rotation speed of screw (rpm)
h1 = channel depth of screw (mm)

The diameter dc of the cylinder is nearly equal to the screw diameter D. The reason is because the gap between the top of the screw and the cylinder wall is extremely narrow and small, generally, 0.03-0.09 mm. Extrusion equipment with the screw shape of the present invention can be used without any problems as long as the gap falls within this general range.

Since the shear rate proportional to the shear stress (shear action) is proportional to the screw rotation speed from the above expression, it has been found that the shear rate is preferably 14/second or more, more preferably 20/second or more in order to apply moderate shear action to the metaxylylene group-containing polyamide based on a material, extrusion equipment, and a cylinder temperature setting encompassed within the scope of the present invention. If the shear rate is less than 14/the second, the metaxylylene group-containing polyamide is easily come out from the discharge port 162 of the single shaft extruder 100 in a 1-5 mm sized particles or in the unmelted state as descried above.

The shear rate in the present invention falls within a sufficiently wide and practical range in a general single shaft extruder so that a practical, general single shaft extruder can be used without a specific motor capacity.

The (flight) width w of the screw is generally about 1/10 of the screw pitch. Extrusion equipment with the screw shape of the present invention can be used without any problems as long as the flight width falls within this general range.

To obtain a tank (container) molded article with fuel barrier properties as the molded article, the cylindrical die is placed at the outlet of a single shaft extruder in which the screw with the screw shape of the present invention is previously inserted. The cylindrical die can be provided with a parison controller to control the wall thickness of the tank molded article; or an accumulator tank accumulating a certain amount of the melted resin at the outlet of the extruder and then by drawing off parison from the cylindrical die at once with an aim of shortening the fall time of parison to prevent the temperature of the resin from decreasing. Even if equipment is provided with such a cylindrical die and a parison controller or an accumulator tank, using the screw shape, the cylinder temperature setting, and the shear rate of the screw rotation of the present invention can disperse the metaxylylene group-containing polyamide in the resin composition composing the molded article in the form of flakes. The parison of the melted resin composition extruded from the cylindrical die is led to the mold with a cavity processed in a desired shape and subjected to mold clamping, pressure molding with air, cooling, and mold opening to obtain a tank molded article.

Furthermore, because of the relationship between the discharge amount of the extruder and the molded article shape (the capacity of the molded article), particularly, depending on the wall thickness of the molded article, thin-wall molding can shorten the molding cycle by continuously driving the extruder. On the other hand, thick-wall molding tends to lengthen the cooling time depending on the number of molds. In this case, the extruder may be intermittently driven, for example, stopped every one shot. Even in such continuous extrusion or intermittent extrusion, using the screw shape and the cylinder temperature setting of the present invention can disperse the metaxylylene group-containing polyamide in the resin composition composing the molded article in the form of the flakes.

A T-die is connected with the outlet of an extruder to obtain a sheet molding article as a molded article. The melted resin composition is extruded in a plate shape from the T-die and then cooled and transferred on a roll to form a flat plate (sheet). In the same way, in the extrusion equipment of the present invention, a sheet with fuel barrier properties in which the metaxylylene group-containing polyamide is dispersed in the resin composition in the form of flaks can be obtained as long as the cylinder temperature setting and the shear rate of the screw rotation are encompassed within the scope of the present invention. A container molding article can be obtained by thermoforming after the processing.

A container molding article obtained according to the present invention and a container processed from a sheet molding article obtained according to the present invention can have various shapes such as a bottle, a cup, a tray, a tank, and a tube. Various articles which can be stored include fuels such as gasoline, kerosene, and gas oil, lubricants such as engine oil and brake oil, various sanitary articles such as bleach, detergent, and shampoo, chemical substances such as ethanol and oxydol, various beverages such as vegetable juice and milk beverage, and seasonings. The container obtained according to the present invention can be effectively used as a container enhancing the storage stability of the stored article. Examples

The present invention will be explained in more detail with reference to Examples and Comparative examples. Resin materials, various test methods, extruders, and screw shapes used in Examples and Comparative examples are as described below.

(1) Polyolefin (A)

Polyolefin 1: high density polyethylene available from Japan Polyethylene Corporation, Brand name: NOVATEC HD HB332R, MFR=0.3 g/10 minutes (load: 2.16 kgf, temperature: 190 °C) , Density: 0.952 g/cm$^3$

Polyolefin 2: high density polyethylene available from Japan Polyethylene Corporation, Brand name: NOVATEC HD HB420R, MFR=0.2 g/10 minutes (load: 2.16 kgf, temperature: 190 °C) , Density: 0.956 g/cm$^3$

Polyolefin 3: high density polyethylene available from Japan Polyethylene Corporation, Brand name: NOVATEC HD HB323R, MFR=0.15 g/10 minutes (load: 2.16 kgf, temperature: 190 °C) , Density: 0.953 g/cm$^3$

Polyolefin 4: high density polyethylene available from Japan Polyethylene Corporation, Brand name: NOVATEC HD HB111R, MFR=0.05 g/10 minutes (load: 2.16 kgf, temperature: 190 °C), Density: 0.945 g/cm$^3$

Polyolefin 5: high density polyethylene available from Japan Polypropylene Corporation, Brand name: EC9, MFR=0.5 g/10 minutes (load: 2.16 kgf, temperature: 190 °C), Density: 0.9 g/cm$^3$ Polyolefin 6: high density polyethylene available from Prime Polymer Co., Ltd., Brand name: HI-ZEX 520B, MFR=0.32 g/10 minutes (load: 2.16 kgf, temperature: 190 °C), Density: 0.96 g/cm$^3$ Polyolefin 7: high density polyethylene available from Prime Polymer Co., Ltd., Brand name: HI-ZEX 537B, MFR=0.27 g/10 minutes (load: 2.16 kgf, temperature: 190 °C), Density: 0.95 g/cm$^3$

Polyolefin 8: high density polyethylene available from Prime Polymer Co., Ltd., Brand name: HI-ZEX 520MB, MFR=0.25 g/10 minutes (load: 2.16 kgf, temperature: 190 °C), Density: 0.96 g/cm$^3$ Polyolefin 9: high density polyethylene available from Prime Polymer Co., Ltd., Brand name: HI-ZEX 8200B, MFR=0.03g/10 minutes (load: 2.16 kgf, temperature: 190 °C), Density: 0.95 g/cm$^3$

(2) Metaxylylene group-containing polyamide (B)

Metaxylylene group-containing polyamide 1: polymetaxylylene adipamide available from MITSUBISHI GAS CHEMICAL COMPANY, INC, Brand name: MX nylon S6121, relative viscosity=3.5, Melting point=243 °C
Metaxylylene group-containing polyamide 2: metaxylylene group-containing polyamide modified with isophthalic acid available from MITSUBISHI GAS CHEMICAL COMPANY, INC, Brand name: MX nylon S7007, relative viscosity=2.7, Melting point = 230 °C

The relative viscosity is a value calculated by the following method.

1 g of the material was precisely weighed and then dissolved in 100 mL of 96% sulfuric acid with being stirred. After dissolved completely, 5 mL of the solution was promptly set in a Cannon-Fenske viscometer and left in a thermostatic chamber at 25 °C for 10 minutes, and then the free-fall time t was measured. The free-fall time t0 of only 96% sulfuric acid was measured under the same condition. The relative viscosity was calculated from the free-fall times t and t0 by the following expression.

$$\texttt{Relative viscosity = t/t0}$$

(3) Adhesive polyolefin (C)

Adhesive polyolefin 1: maleic anhydride-modified polyethylene available from Japan Polyethylene Corporation, Brand name: Adtex L6100M and density 0.92 g/cm$^3$
Adhesive polyolefin 2: modified polypropylene available from Japan Polypropylene Corporation, Brand name: MODIC P604V, Density: 0.9 g/cm$^3$

(4) Fuel barrier property test I; Measurement of permeation rate of fuel through sheet molding article

A sheet with a thickness of 2.5 mm was formed. Then, a 70 φmm disc was punched out from this sheet and used as the test specimen.

Subsequently, 100 ml of pseudo-gasoline (commonly known as "CE10") consisting of isooctane/toluene/ethanol=45/45/10 vol% was filled with a test aluminum container with an internal volume of 120 mL. The 70 φmm disc test specimen was clamped with two pairs of Viton packings and washers and then mounted on the test container by using the screw lid with a 55 φmm opening. Then, the total weight of the container immediately after pseudo-gasoline was filled was measured. The container was preserved in an explosion-proof hot air dryer at 40 °C, and the temporal change of the total weight was examined, until the permeation rate of fuel per day was balanced. After the permeation rate of fuel was balanced, the permeation rate (g·mm/m$^2$·day·atm) of the pseudo-gasoline per day was determined from the decreased weight of the container.

(5) Fuel barrier property test II; Measurement of permeation rate of fuel through 0.5 L tank molding article

Subsequently, 200 ml of pseudo-gasoline (CE10) consisting of isooctane/toluene/ethanol=45/45/10 vol% was filled with a test 0.5 L tank molding article. The plug opening was sealed with an aluminum foil laminating film and closed with the cap. The cap was fixed with an aluminum tape so as not to loosen. Then, the total weight of the tank immediately after pseudo-gasoline was filled was measured. The tank was preserved in a hot air dryer at 40 °C, and the temporal change of the total weight was examined, until the permeation rate of fuel per day was balanced. After the permeation rate of fuel was balanced, the permeation rate (g·mm/m$^2$·day·atm) of the pseudo-gasoline per day was determined from the decreased weight of the tank. For the tank molded article formed by blow molding, the thickness was measured at the midsection. The permeation rate of the pseudo-gasoline was determined from this thickness and compared.

(6) Examination of dispersed state of metaxylylene group-containing polyamide

The formed sheet or tank was cut, the cut surface was smoothed with a cutter, and then dilute iodine tincture (available from Tsukishima yakuhin) was applied to the cut surface to stain the metaxylylene group-containing polyamide. The dispersed state of the metaxylylene group-containing polyamide in the resin composition was examined through the magnifying glass of a stereomicroscope.

(7) Tension test

The test specimens were punched out from the formed sheet with a thickness of about 2.5 mm by using a wood pattern with the shape of type IV specimens (full-length including the gripping portion: 120 mm, width: 10 mm, length: 50 mm) and with a Thomson blade to form a test specimen. The tension (yield) strength of each punched out specimen was measured with a tensile tester (STROGRAPH AP III available from TOYO SEIKI Co., Ltd). The test specimens were split up into two groups: one has the longitudinal direction (MD) same as the sheet flow direction, and the other has the longitudinal direction (TD) vertical to the sheet flow direction. The number of measurement samples was 5/group. The tension (yield) strength was determined at the average. The tension test was conducted at rate of the 50mm/min.

(8) Extruder

25 φmm single shaft extruder (PTM25 available from PLABOR Research Laboratory of Plastics Technology Co., Ltd) 55 φmm single shaft extruder (available from Tsuseki kogyo)

(9) Screw shape

The screws used in Examples and Comparative examples have the screw shapes a-d described in Table 1.
Table 1

Table 1

| Screw shape | Item | Effective lengths L (mm) | Screw diameter D (mm) | Feeding part | | | Compressing part | | Measuring Part | | | h2 / D | L / D | Compression ratio |
|---|---|---|---|---|---|---|---|---|---|---|---|---|---|---|
| | | | | Length (mm) | Number of thread | Groove depth h2 (mm) | Length (mm) | Number of thread | Length (mm) | Number of thread | Groove depth h1 (mm) | | | |
| a | Actual dimension | 594 | 25 | 300 | 12 | 4.9 | 125 | 5 | 169 | 7 | 1.6 | 0.20 | 23.8 | 2.63 |
| | Length of zone / Effective length | | | 0.51 | | | 0.21 | | 0.28 | | | | | |
| b | Actual dimension | 1521 | 55 | 660 | 12 | 13.5 | 330 | 6 | 531 | 10 | 4.5 | 0.25 | 27.7 | 2.47 |
| | Lengths of zone / Effective length | | | 0.43 | | | 0.22 | | 0.35 | | | | | |
| c | Actual dimension | 594 | 25 | 200 | 8 | 3.9 | 200 | 8 | 194 | 8 | 1.1 | 0.16 | 23.8 | 3.13 |
| | Length of zone / Effective length | | | 0.34 | | | 0.34 | | 0.33 | | | | | |
| d | Actual dimension | 1521 | 55 | 541 | 11 | 9 | 601 | 12 | 379 | 7.6 | 3 | 0.16 | 27.7 | 2.65 |
| | Length of zone / Effective length | | | 0.36 | | | 0.40 | | 0.25 | | | | | |

Example 1

70 parts by mass of the polyolefin 1, 20 parts by mass of the adhesive polyolefin 1, and 10 parts by mass of the metaxylylene group-containing polyamide 1 were dry blended to generate the raw mixture 1.

This raw mixture was extruded as a resin composition by using a 25 φmm single shaft extruder (PTM25 available from PLABOR Research Laboratory of Plastics Technology Co., Ltd) in which a screw with the shape a was inserted, the cylinder temperatures of the feeding part, the compressing part, and the measuring part, as well as the head, the adaptor, and the T-die were set to 225 °C, and the rotation speed was 110 rpm (shear rate= 90/second). The sheet with a thickness of about 2.4 mm was formed by T-die roll cooling at a roll temperature of 30 °C.

For the obtained sheet, the dispersed state of the metaxylylene group-containing polyamide was examined, and the tension test and the fuel barrier property test I were conducted. These results were described in Table 2.

As seen from Table 2, the metaxylylene group-containing polyamide was dispersed in the resin composition in the form of long lines (flakes). Furthermore, the permeability of pseudo-gasoline (CE10) per day is $10\,g\cdot mm/m^2\cdot day\cdot atm$, which shows the excellent fuel barrier properties.

Examples 2-7

Except the types and the blending amounts of the resin materials as well as the molding conditions such as the cylinder temperature setting and the screw shear rate were changed as described in Table 2, these Examples were conducted in the same way as Example 1 to form sheets.

For each of the obtained sheets, the dispersed state of the metaxylylene group-containing polyamide was examined, and the tension test and the fuel barrier property test I were conducted. These results were described in Table 2.

It was confirmed that the metaxylylene group-containing polyamide was dispersed in the resin composition in the form of lines (flakes) at some parts. Each of the sheets showed excellent gasoline permeability.

Table 2

Table 2

| Molding conditions | | | Examples | | | | | | |
|---|---|---|---|---|---|---|---|---|---|
| | | | 1 | 2 | 3 | 4 | 5 | 6 | 7 |
| Extrusion equipment | Extruder | | 25φ mm single shaft | | | | | | |
| | Screw shape | | a | a | a | a | a | a | a |
| Resin materials | Polyolefin (A) | Type no. | 1 | 1 | 1 | 2 | 4 | 1 | 5 |
| | | parts by mass | 70 | 50 | 70 | 80 | 70 | 75 | 70 |
| | Metaxylylene group- contaning polyamide (B) | Type no. | 1 | | 1 | 1 | 1 | 1 | 1 |
| | | parts by mass | 10 | 30 | 10 | 10 | 10 | 5 | 10 |
| | Adhesive polyolefin (C) | Type no. | 1 | 1 | 1 | 1 | 1 | 1 | 2 |
| | | parts by mass | 225 | 20 | 20 | 10 | 20 | 20 | 20 |
| Cylinder temperature | Feeding part C1 | °C | 225 | 225 | 240 | 245 | 250 | 225 | 225 |
| | Feeding part Compressing C2 | °C | 225 | 225 | 240 | 246 | 260 | 225 | 225 |
| | Compressing part and Measuring part C3 | °C | 225 | 225 | 240 | 245 | 260 | 225 | 225 |
| Head temperature | H | °C | 225 | 225 | 240 | 245 | 260 | 225 | 225 |
| Adaptor temperature | AD | °C | 225 | 225 | 220 | 245 | 260 | 225 | 225 |
| T-dietemperature | | °C | 225 | 225 | 220 | 245 | 250 | 225 | 225 |
| Strew rotation speed | | rpm | 110 | 110 | 110 | 110 | 95 | 110 | 110 |
| Shear rate | | sec$^{-1}$ | 90 | 90 | 90 | 90 | 78 | 90 | 90 |
| Molded sample | | | Sheet | Sheet | Sheet | Sheet | Sheet | Sheet | Sheet |
| Examination of cross section Dispersed state of polyamide | Lines : L Particles: P | | L | L | L | L | L | L | L |
| Fuel barrier property test | Permeation rate | g·mm/m$^2$·day·atm | 10 | 3 | 12 | 10 | 15 | 25 | 15 |
| Tension test (Tension strength) | MD direction | MPa | 21 | 27 | 20 | 23 | 23 | 20 | 22 |
| | TD direction | MPa | 22 | 29 | 20 | 25 | 22 | 21 | 23 |
| Thickness of sheet | | mm | 24 | 2.5 | 2.4 | 2.4 | 2.5 | 2.4 | 2.4 |

Example 8

70 parts by mass of the polyolefin 1, 20 parts by mass of the adhesive polyolefin 1, and 10 parts by mass of the metaxylylene group-containing polyamide 1 were dry blended to generate the raw mixture 8.

This raw mixture was extruded as a resin composition by using a 55 φmm single shaft extruder (available from Tsuseki kogyo) in which a screw with the shape b is inserted, the cylinder temperature of the feeding part was set to 210-225 °C, the compressing part to 235 °C, the measuring part to 235-233 °C, the head to 233 °C, the adaptor to 225 °C, and the T-die to 215 °C, and the rotation speed is 22 rpm (shear rate= 14/second). In cylindrical die-mold cooling during direct blow molding with cylindrical die-mold cooling, continuous extrusion was conducted in molding cycles of 24 seconds to obtain a 0.5 L tank molded article.

The temperature of the mold-cooling water was about 20-30 °C. The thickness at the midsection of the tank was about 2 mm.

For the obtained tank molded article, the dispersed state of the metaxylylene group-containing polyamide was examined, and the tension test and the fuel barrier property test II were conducted. These results were described in Table 3.

It was confirmed that the metaxylylene group-containing polyamide was dispersed in the resin composition in the form of long lines (flakes) at the midsection and the pinch-off part of the tank molded article.

Furthermore, the permeability of pseudo-gasoline (CE10) per day is 18 $g/m^2 \cdot day$, which shows the good fuel barrier properties.

Examples 9-13

Except the types and the blending amounts of the resin materials as well as the molding conditions such as the cylinder temperature setting and the screw shear rate were changed as described in Table 3, these Examples were conducted in the same way as Example 8. In these Examples, intermittent extrusion was conducted in molding cycles of 90 seconds to form a 0.5 L tank molded articles each with a thickness of about 4 mm at the midsection.

For each of the obtained tank molded articles, the dispersed state of the metaxylylene group-containing polyamide was examined, and the fuel barrier property test II was conducted. These results were described in Table 3.

It was confirmed that the metaxylylene group-containing polyamide was dispersed in the resin composition in the form of lines (flakes) at some parts. Each of the tank molded articles showed excellent gasoline permeability.

Table 3

| Molding conditions | | | Examples | | | | | |
|---|---|---|---|---|---|---|---|---|
| | | | 8 | 9 | 10 | 11 | 12 | 13 |
| Extrusion equipment | Extruder | | 55φ mn single shaft | | | | | |
| | Screw shape | | b | b | b | b | b | b |
| Resin materials | Polyolefin (A) | Type no | 1 | 1 | 2 | 2 | 1 | 1 |
| | | parts by mass | 70 | 70 | 70 | 80 | 50 | 75 |
| | Metaxylylene goup-containing polyamide (B) | Type no. | 1 | 1 | 1 | 1 | 1 | 1 |
| | | parts by mass | 10 | 10 | 10 | 10 | 30 | 5 |
| | Adhesive polyolefin (C) | Type no. | 1 | 1 | 1 | 1 | 1 | 1 |
| | | parts by mass | 20 | 20 | 20 | 10 | 20 | 20 |

(continued)

| Molding conditions | | | Examples | | | | | |
|---|---|---|---|---|---|---|---|---|
| | | | 8 | 9 | 10 | 11 | 12 | 13 |
| Cylinder temperature | Feeding part C1 | °C | 210 | 210 | 210 | 210 | 210 | 210 |
| | Feeding part C2 | °C | 225 | 225 | 225 | 225 | 225 | 225 |
| | Feeding part and Compressing part C3 | °C | 235 | 230 | 230 | 230 | 230 | 230 |
| | Compressing part and Measuring part C4 | °C | 235 | 233 | 235 | 233 | 235 | 235 |
| | Measuring part C5 | °C | 233 | 233 | 235 | 233 | 235 | 235 |
| Head temperature | H | °C | 233 | 225 | 225 | 225 | 230 | 230 |
| Adaptor temperature | AD | °C | 215 | 225 | 225 | 225 | 230 | 230 |
| T-die temperature | | °C | 215 | 215 | 215 | 218 | 215 | 215 |
| Screw rotation speed | | rpm | 22 | 50 | 50 | 50 | 26 | 26 |
| Shear rate | | sec$^{-1}$ | 14 | 32 | 32 | 32 | 17 | 17 |
| Molded sample | | | Tank | Tank | Tank | Tank | Tank | Tank |
| Examination of cross section Dispersed state of polyamide | Lines : L Particles : P | | L | L | L | L | L | L |
| Fuel barrier property test | Permeation rate | g/m$^2$·day | 18 | 16 | 12 | 12 | 11 | 26 |
| Thickness of molded article (midsection) | | mm | 2 | 4 | 4 | 4 | 4.3 | 4.3 |

Examples 14-18

Except the types and the blending amounts of the resin materials as well as the molding conditions such as the cylinder temperature setting and the screw shear rate were changed as described in Table 4, these Examples were conducted in the same way as Example 1 to form sheets.

For each of the obtained sheets, the dispersed state of the metaxylylene group-containing polyamide was examined, and the fuel barrier property test I was conducted. These results were described in Table 4.

For each of the sheets, it was confirmed that the metaxylylene group-containing polyamide was dispersed in the resin composition in the form of long lines (flakes). Furthermore, the sheets showed excellent fuel barrier properties.

Table 4

Table 4

| Molding conditions | | | Examples | | | | |
|---|---|---|---|---|---|---|---|
| | | | 14 | 15 | 16 | 17 | 18 |
| Extrusion equipment | Extruder | | 25φ mm single shaft | | | | |
| | Strew shape | | a | a | a | a | a |
| Resin materials | Polyolefin (A) | Type no. | 6 (MFR=0,32) | 7 (MFR=0.27) | 8 (MFR+0.25) | 9 (MFR=0.03) | 9 |
| | | parts by mass | 80 | 80 | 80 | 70 | 80 |
| | Metaxylylene group-contaning polyamide (B) | Type no. | 1 | 1 | 1 | 1 | 1 |
| | | parts by mass | 10 | 10 | 10 | 10 | 10 |
| | Adhesive polyolefin (C) | Type no. | 1 | 1 | 1 | 1 | 1 |
| | | parts by mass | 10 | 10 | 10 | 20 | 10 |
| Cylinder temperature | Feeding part C1 | °C | 235 | 235 | 235 | 250 | 250 |
| | Feeding part and Compressing part C2 | °C | 245 | 245 | 245 | 260 | 260 |
| | Corrpressing part and Measuring part C3 | °C | 245 | 245 | 245 | 260 | 260 |
| Head terrperature | H | °C | 240 | 240 | 240 | 260 | 260 |
| Adaptor temperature | AD | °C | 240 | 240 | 240 | 260 | 260 |
| T-die temperature | | °C | 230 | 230 | 230 | 250 | 250 |
| Screw rotation speed | | rpm | 110 | 110 | 110 | 95 | 95 |
| Shear rate | | sec$^{-1}$ | 90 | 90 | 90 | 78 | 78 |
| Molded sample | | | Sheet | Sheet | Sheet | Sheet | Sheet |
| Examination of cross section Dispersed state of polyamide | Lines : L Particles : P | | L | L | L | L | L |
| Fuel barrier property test | Permeation rate | g·mm/m$^2$·day·atm | 14 | 14 | 10 | 17 | 18 |
| Tension test (Tension strength) | MD direction | MPa | 24 | 22 | 26 | 20 | 21 |
| | TD direction | MPa | 25 | 23 | 29 | 21 | 22 |
| Thickness of sheet | | mm | 2.5 | 2.5 | 2.5 | 2.5 | 2.5 |

Examples 19-23

Except the types and the blending amounts of the resin materials as well as the molding conditions such as the cylinder temperature setting and the screw shear rate were changed as described in Table 5, these Examples were conducted in the same way as Example 1 to form sheets.

For each of the obtained sheets, the dispersed state of the metaxylylene group-containing polyamide was examined, and the tension test and the fuel barrier property test I were conducted. These results were described in Table 5.

For each of the sheets, it was confirmed that the metaxylylene group-containing polyamide was dispersed in the resin composition in the form of long lines (flakes). Furthermore, the sheets showed excellent fuel barrier properties.

Table 5

Table 5

| Molding conditions | | | Examples | | | | |
|---|---|---|---|---|---|---|---|
| | | | 19 | 20 | 21 | 22 | 23 |
| Extrusion equipment | Extruder | | 25φ mm single shaft | | | | |
| | Screw shape | | a | a | a | a | a |
| Resin materials | Polyolefin (A) | Type no. | 1 | 2 | 3 | 1 | 2 |
| | | parts by mass | 80 | 80 | 80 | 80 | 80 |
| | Metaxylylene group-containing polyamide (B) | Type no. | 2 | 2 | 2 | 2 | 2 |
| | | parts by mass | 10 | 10 | 10 | 10 | 10 |
| | Adhesive polyolefin (C) | Type no. | 1 | 1 | 1 | 1 | 1 |
| | | parts by mass | 10 | 10 | 10 | 10 | 10 |
| Cylinder temperature | Feeding part C1 | °C | 225 | 225 | 225 | 235 | 235 |
| | Feeding part and Compressing part C2 | °C | 225 | 225 | 225 | 245 | 245 |
| | Compressing part and Measuring part C3 | °C | 225 | 225 | 225 | 245 | 245 |
| Head temperature | H | °C | 225 | 225 | 225 | 245 | 245 |
| Adaptor temperature | AD | °C | 225 | 225 | 225 | 245 | 245 |
| T-die temperature | | °C | 220 | 220 | 220 | 235 | 235 |
| Screw rotation speed | | rpm | 110 | 110 | 110 | 110 | 110 |
| Shear rate | | $sec^{-1}$ | 90 | 90 | 90 | 90 | 90 |
| Molded sample | | | Sheet | Sheet | Sheet | Sheet | Sheet |
| Examination of cross section Dispersed state of polyamide | Lines: L Particles : P | | L | L | L | L | L |
| Fuel barrier property test | Permeation rate | $g \cdot mm/m^2 \cdot day \cdot atm$ | 4 | 6 | 2 | 9 | 9 |
| Tension test (Tension strength) | MD direction | MPa | 22 | 22 | 22 | 21 | 24 |
| | TD direction | MPa | 22 | 25 | 23 | 22 | 25 |
| Thickness of sheet | | mm | 2.5 | 2.5 | 2.5 | 2.5 | 2.5 |

Comparative example 1

Except a screw with the shape c was used, this comparative example was conducted in the same way as Example 1 to form a sheet. The screw rotation speed is the same as that of Example 1, but the shear rate was different as shown in Table 6 due to the screw shape different from that of Example 1.

For each of the obtained sheets, the dispersed state of the metaxylylene group-containing polyamide was examined, and the tension test and the fuel barrier property test I were conducted. These results were described in Table 6.

In Comparative example 1, since the length ratio of the compressing part of the screw used for the molding is large, the metaxylylene group-containing polyamide was excessively dispersed in the resin composition composing the sheet in the form of particles. The result showed not good fuel barrier properties.

Comparative examples 2-3

Except a screw with the shape c was used and except the blending amounts of the resin materials as well as the molding conditions such as the setting of the cylinder temperature and the screw shear rate were changed as described in Table 6, these Comparative examples were conducted in the same way as Example 1 to form sheets.

For each of the obtained sheets, the dispersed state of the metaxylylene group-containing polyamide was examined, and the fuel barrier property test I was conducted. These results were described in Table 6.

In Comparative example 2, since the length ratio of the compressing part of the screw used for the molding is large, the metaxylylene group-containing polyamide was excessively dispersed in the resin composition composing the sheet in the form of particles. The result showed not good fuel barrier properties.

In Comparative example 3, since the cylinder temperatures of the feeding part and the compressing part were low, the metaxylylene group-containing polyamide was unmelted in the obtained sheet.

Table 6

Table 6

| Molding conditions | | | Comparative examples | | |
|---|---|---|---|---|---|
| | | | 1 | 2 | 3 |
| Extrusion equipment | Extruder | | 25φ mm single shaft | | |
| | Screw shape | | c | c | c |
| Resin materials | Polyolefin (A) | Type no. | 1 | 1 | 1 |
| | | parts by mass | 70 | 50 | 70 |
| | Metaxylylene group-containing polyanide (B) | Type no. | 1 | 1 | 1 |
| | | parts by mass | 10 | 30 | 10 |
| | Adhesive polyolefin (C) | Type no. | 1 | 1 | 1 |
| | | parts by mass | 20 | 20 | 20 |
| Cylinder temperature | Feeding part and Compressing part C1 | °C | 225 | 225 | 210 |
| | Compressing part C2 | °C | 225 | 225 | 210 |
| | Measuring part C3 | °C | 225 | 225 | 210 |
| Head temperature | H | °C | 225 | 225 | 210 |
| Adaptor temperature | AD | °C | 225 | 225 | 210 |
| T-die temperature | | °C | 225 | 220 | 210 |
| Screw rotation speed | | rpm | 110 | 110 | 80 |
| Shear rate | | sec$^{-1}$ | 131 | 131 | 95 |
| Molded sample | | | Sheet | Sheet | Sheet |
| Examination of cross section Dispersed state of polyamide | Lines : L Particles : P | | P | P | Unmelted polyamide |

(continued)

| Molding conditions | | | Comparative examples | | |
|---|---|---|---|---|---|
| | | | 1 | 2 | 3 |
| Fuel barrier property test | Permeation rate | g·mm/ m²·day· atm | 63 | 58 | 68 |
| Tension test (Tension strength) | MD direction | MPa | 21 | 25 | 21 |
| | TD direction | MPa | 22 | 25 | 23 |
| Thickness of sheet | | mm | 2.5 | 2.5 | 2.5 |

Comparative example 4

Except the blending amounts of the resin materials was changed as described in Table 7, this comparative example was conducted in the same way as Example 1 to form a sheet.

For the obtained sheet, the dispersed state of the metaxylylene group-containing polyamide was examined, and the tension test and the fuel barrier property test I were conducted. These results were described in Table 7.

Since the content of the metaxylylene group-containing polyamide is high in the resin composition composing the sheet, in the cross section of the obtained sheet, the metaxylylene group polyamide is dispersed in the form of lines but scattered in large masses as well. These masses showed up as white spots on the surface of the sheet with defective appearance. In the fuel barrier property test, the sheet showed excellent fuel barrier properties but inferior practicality with poor appearance.

Comparative example 5

Except the cylinder temperature and the screw rotation speed were changed as described in Table 7, this comparative example was conducted in the same way as Example 7 to form a sheet.

For the obtained sheet, the dispersed state of the metaxylylene group-containing polyamide was examined, and the tension test and the fuel barrier property test I were conducted. These results were described in Table 7. Since all the temperatures of the feeding part, the compressing part, and the measuring part was too high during the molding process, the metaxylylene group-containing polyamide was excessively dispersed in the resin composition composing the obtained sheet in the form of particles. Furthermore, the result showed poor fuel barrier properties.

Comparative example 6

As described in Table 7, except the screw rotation speed is decreased and except the screw shear rate was changed, this comparative example was conducted in the same way as Example 1 to form a sheet.

For the obtained sheet, the dispersed state of the metaxylylene group-containing polyamide was examined, and the fuel barrier property test I was conducted. These results were described in Table 7. The metaxylylene group-containing polyamide was unmelted in the resin composition.

It could not be confirmed that the metaxylylene group-containing polyamide was dispersed in the form of lines (flakes). Furthermore, the result also showed poor gasoline permeability.

Table 7

Table 7

| Molding conditions | | Comparative examples | | |
|---|---|---|---|---|
| | | 4 | 5 | 6 |
| Extrusion equipment | Extruder | 25φ mm single shaft | | |
| | Screw shape | a | a | a |

(continued)

| Molding conditions | | | Comparative examples | | |
|---|---|---|---|---|---|
| | | | 4 | 5 | 6 |
| Resin materials | Polyolefin (A) | Type no. | 1 | 1 | 1 |
| | | parts by mass | 45 | 75 | 70 |
| | Metaxylylene group-containing polyamide (B) | Type no. | 1 | 1 | 1 |
| | | parts by mass | 35 | 5 | 10 |
| | Adhesive polyolefin (C) | Type no. | 1 | 1 | 1 |
| | | parts by mass | 20 | 20 | 20 |
| Cylinder temperature | Feeding part: C1 | °C | 225 | 280 | 225 |
| | Feeding part and Comoressing par C2 | °C | 225 | 260 | 225 |
| | Measuring part C3 | °C | 225 | 260 | 225 |
| Head temperature | H | °C | 225 | 225 | 225 |
| Adaptor temperature | AD | °C | 225 | 225 | 225 |
| T-die temperature | | °C | 220 | 225 | 225 |
| Screw rotation speed | | rpm | 110 | 80 | 15 |
| Shear rate | | $sec^{-1}$ | 131 | 95 | 12 |
| Molded sample | | | Sheet | Sheet | Sheet |
| Examination of cross section Dispersed state of polyamide | Lines : L Particles : P | | Poor appearance | P | Unmelted polyamide |
| Fuel barrier property test | Permeation rate | $g \cdot mm/m^2 \cdot day \cdot atm$ | 3 | 66 | 82 |
| Tension test (Tension strength) | MD direction | MPa | 26 | 21 | - |
| | TD direction | MPa | 26 | 23 | - |
| Thickness of sheet | | mm | 2.5 | 2.5 | 2.4 |

Comparative example 7

Except a screw with the shape d was used and except the molding conditions such as the cylinder temperature setting and the screw shear rate were changed as described in Table 8, this comparative example was conducted in the same way as Example 8 to form a 0.5 tank molded article. Continuous extrusion was conducted in molding cycles of 24 seconds. The tank molded article has a thickness of about 2 mm.

For the obtained tank molded articles, the dispersed state of the metaxylylene group-containing polyamide was examined, and the fuel barrier property test II was conducted. These results were described in Table 8.

In Comparative example 7, the metaxylylene group-containing polyamide was excessively dispersed in the resin composition composing the tank in the form of particles because the length ratio of the compressing part of the screw used for the molding is large, The result showed not good fuel barrier properties.

Table 8

Table 8

| Molding conditions | | Comparative examples |
|---|---|---|
| | | 7 |
| Extrusion equipment | Extruder | 55mmφ single shaft |
| | Screw shape | d |

(continued)

| Molding conditions | | | Comparative examples |
|---|---|---|---|
| | | | 7 |
| Resin materials | Polyolefin (A) | Type no. | 1 |
| | | parts by mass | 70 |
| | Metaxylylene group-containing polyamide (B) | Type no. | 1 |
| | | parts by mass | 10 |
| | Adhesive polyolefin (C) | Type no. | 1 |
| | | parts by mass | 20 |
| Cylinder temperature | Feeding part C1 | °C | 185 |
| | Feeding part C2 | °C | 215 |
| | Compressing part C3 | °C | 225 |
| | Compressing part and Measuring part C4 | °C | 225 |
| | Measuring part C5 | °C | 225 |
| Head temperature | H | °C | 225 |
| Adaptor temperature | AD | °C | 225 |
| T- die temperature | | °C | 225 |
| Screw rotation speed | | rpm | 50 |
| Shear rate | | sec$^{-1}$ | 48 |
| Molded sample | | | Tank |
| Examination of cross section Dispersed state of polyamide | Lines : L  Particles : P | | P |
| Fuel barrier property test | Permeation rate | g/m$^2$·day | 42 |
| Thickness of molded article (midsection) | | mm | 2 |

Comparative examples 8-10

Except a screw with the shape b was used and except the cylinder temperature setting and the screw rotation speed were changed as described in Table 9, these Comparative examples were conducted in the same way as Example 11 to form 0.5 L tank molded articles.

For the obtained tank molded articles, the dispersed state of the metaxylylene group-containing polyamide was examined, and the fuel barrier property test II was conducted. These results were described in Table 9.

In Comparative example 8, since the cylinder temperatures of the feeding part and the measuring part were high, the metaxylylene group-containing polyamide was excessively dispersed in the resin composition composing the tank in the form of particles. The result showed not good fuel barrier properties.

In Comparative example 9, since the cylinder temperatures of the feeding part and the compressing part were low, the metaxylylene group-containing polyamide was unmelted.

In Comparative example 10, since the cylinder temperature of the feeding part was high, the metaxylylene group-containing polyamide was excessively dispersed in the resin composition composing the tank in the form of particles. The result showed not good fuel barrier properties.

Comparative example 11

As described in Table 9, except the screw rotation speed is decreased and except the screw shear rate was changed, this comparative example was conducted in the same way as Example 8 to form a 0.5 L tank molded article.

For the obtained tank molded article, the dispersed state of the metaxylylene group-containing polyamide was examined, and the fuel barrier property test II was conducted. These results were described in Table 9.

In Comparative example 11, since the shear rate was low during the molding process, the metaxylylene group-containing polyamide was unmelted. Furthermore, the result showed poor fuel barrier properties.

Table 9

Table 9

| Molding conditions | | | Comparative examples | | | |
|---|---|---|---|---|---|---|
| | | | 8 | 9 | 10 | 11 |
| Extrusion equipment | Extruder | | 55mmφ single shaft | | | |
| | Screw shape | | b | b | b | b |
| Resin materials | Polyolefin (A) | Type no. | 2 | 2 | 2 | 1 |
| | | parts by mass | 80 | 80 | 80 | 70 |
| | Metaxylylene group-containing polyamide (B) | Type no. | 1 | 1 | 1 | 1 |
| | | parts by mass | 10 | 10 | 10 | 10 |
| | Adhesive polyolefin (C) | Type no. | 1 | 1 | 1 | 1 |
| | | parts by mass | 10 | 10 | 10 | 20 |
| Cylinder temperature | Feeding part C1 | °C | 260 | 210 | 280 | 210 |
| | Feeding part C2 | °C | 260 | 225 | 280 | 225 |
| | Feeding part and Compressing part C3 | °C | 275 | 205 | 260 | 235 |
| | Compressing part and Measuring part C4 | °C | 275 | 205 | 260 | 235 |
| | Measuring part C5 | °C | 275 | 205 | 260 | 233 |
| Head temperature | H | °C | 235 | 205 | 235 | 233 |
| Adaptor temperature | AD | °C | 235 | 205 | 235 | 215 |
| T-die temperature | | °C | 235 | 205 | 235 | 215 |
| Screw rotation speed | | rpm | 25 | 50 | 25 | 18 |
| Shear rate | | sec$^{-1}$ | 16 | 32 | 16 | 12 |
| Molded sample | | | Tank | Tank | Tank | Tank |
| Examination of cross section Dispersed state of polyamide | Lines : L Particles : P | | P | Unmelted polyamide | P | Unmelted polyamide |
| Fuel barrier property test | Permeation rate | g/m$^2$·day | 42 | 47 | 44 | 48 |
| Thickness of molded article (midsection) | | mm | 4 | 4 | 4 | 2 |

Reference Signs List

100 single shaft extruder

110 hopper

140 cylinder

142 inner circumferential face of cylinder

120 temperature controller provided on hopper

130 cooling water hole

150 screw

150a feeding part

150b compressing part

150c measuring part

152 screw shaft

154 threading part

170 screw drive

h1 = channel depth of measuring part (mm)

h2 = channel depth of feeding part (mm)

dc = diameter of cylinder (mm)

C1, C2, C3 heater (temperature controller)

D screw diameter (including threading part, that is, outer diameter of screw)

d diameter of screw shaft (not including threading part)

w width of screw (flight width)

**Claims**

1.  A method for producing a molded article comprising a resin composition, wherein
    a raw mixture is obtained by blending 40-90 parts by mass of a polyolefin (A), 3-30 parts by mass of the metaxylylene group-containing polyamide (B), and 3-50 parts by mass of an adhesive polyolefin (C),
    and the resin composition is generated by using a single shaft extruder (100) which includes:

    a screw (150) having a screw shaft (152) and a threading part (154) spirally formed on the side of the screw shaft (152), the threading part (154) conveying the resin composition from the base end to the top end of the screw shaft (152) by rotating the screw shaft (152);
    a cylinder (140) having an inner circumferential face (142) with a cylindrical inner face shape, in the cylinder (140) the screw (150) being inserted rotatably;
    temperature controllers adjusting the temperature of the resin composition conveyed from the base end to the top end by rotating the screw (150); and
    a screw drive (170) rotating the screw (150) at a predetermined shear rate, **characterized in that** the single shaft extruder (100) further satisfies the following condition (1), and that the raw mixture is melted and mixed under the following conditions (2) and (3):

(1): the screw shaft (152) includes: a feeding part (150a) being a part in which the screw channel depth between the tip end of the threading part and the surface of the screw shaft (152) from the base end to the top end of the screw shaft (152) is constant; a compressing part (150b) following the feeding part (150a), the compressing part (150b) being a part in which the screw channel depth is gradually shorter; and a measuring part (150c) following the compressing part (150b), the measuring part (150c) being a part in which the screw channel depth is shorter and constant than that of the feeding part (150a), and
the ratio of the length of the feeding part (150a) to the screw effective length of the screw shaft (152) falls within the range of 0.43-0.55, the ratio of the length of the compressing part (150b) to the screw effective length falls within the range of 0.20-0.30, the ratio of the length of the measuring part (150c) to the screw effective length falls within the range of 0.20-0.40, and the sum of the ratios is 1.0,
(2): the upper limit of the cylinder temperature of the feeding part (150a) falls within the range of from 4°C to a temperature which is 20°C higher than the melting point of the metaxylylene group-containing polyamide (B), and the cylinder temperatures of the compressing part (150b) and the measuring part (150c) fall within the range of from (i) a temperature which is 30°C lower than the melting point of the metaxylylene group-containing polyamide (B) to (ii) a temperature which is 20°C higher than the melting point of the metaxylylene group-containing polyamide (B), and
(3): the predetermined shear rate is 14/second or more.

2. The method according to claim 1, wherein in the single shaft extruder (100), the shape of the screw satisfies the following conditions (1) - (3),

   in the condition (1), the ratio of the screw effective length L to the diameter D of the top end of the threading part (154) (L/D ratio) falls within the range of 22-32,
   in the condition (2), the screw channel depth h2 of the feeding part (150a) falls within the range of 0.1-0.3D,
   in the condition (3), the compression ratio falls within the range of 2.3-3.5, and the compression ratio is the ratio of the sectional area of the feeding part (150a) to that of the measuring part (150c).

3. The method according to claim 1 or 2, wherein the metaxylylene group-containing polyamide (B) contains a diamine unit including 70 mol% or more of a metaxylylene diamine unit and a dicarboxylic acid unit including 50 mol% or more of an $\alpha,\omega$-aliphatic dicarboxylic acid unit.

4. The method according to claim 1 or 2, wherein the relative viscosity of the metaxylylene group-containing polyamide (B) is 2.0-4.5.

5. The method according to claim 1 or 2, wherein the melt flow rate (MFR) of the polyolefin (A) falls within the range of 0.03 g/10 minutes or more (load: 2.16 kgf, temperature: 190 °C) and 2 g/10 minutes or less (load: 2.16 kgf, temperature: 190 °C).

6. The method according to any one of claims 1-5, wherein the molded article is a hollow container obtained by direct blow molding.

7. The method according to any one of claims 1-5, wherein the molded article is a sheet obtained by T-die roll cooling.

**Patentansprüche**

1. Ein Verfahren zur Herstellung eines Formteils das eine Harzzusammensetzung umfasst, wobei eine Rohmaterialmischung durch Mischen von 40-90 Massenteilen eines Polyolefins (A), 3-30 Massenteilen des Metaxylylengruppen-enthaltenden Polyamids (B), und 3-50 Massenteilen eines adhäsiven Polyolefins (C) erhalten wird,
und die Harzzusammensetzung unter Verwendung eines Einwellenextruders (100) gebildet wird, welcher beinhaltet:

   eine Schnecke (150), die eine Schneckenantriebswelle (152) und ein Gewindeteil (154) aufweist, das spiralförmig an der Seite der Schneckenantriebswelle (152) gebildet ist, wobei das Gewindeteil (154) durch Rotieren der Schneckenantriebswelle (152) die Harzzusammensetzung vom unteren Ende zum oberen Ende der Schneckenantriebswelle (152) fördert;
   einen Zylinder (140), der eine innere Umfangsfläche (142) mit einer zylindrischen Form der inneren Fläche aufweist, wobei die Schnecke (150) in dem Zylinder (140) rotierbar eingesetzt ist;
   Temperaturregler, die die Temperatur der Harzzusammensetzung einstellen, die durch Rotieren der Schnecke vom unteren Ende zum oberen Ende transportiert wird; und

einen Schneckenantrieb (170), der die Schnecke (150) mit einer festgelegten Schergeschwindigkeit rotiert, **dadurch gekennzeichnet dass** der Einwellenextruder (100) weiter die folgende Bedingung (1) erfüllt, und dass die Rohmaterialmischung unter den folgenden Bedingungen (2) und (3) geschmolzen und vermischt wird:

(1): die Schneckenantriebswelle (152) beinhaltet: einen Beschickungsteil (150a) als einen Teil, in welchem die Schneckenkanaltiefe zwischen dem äußeren Ende des Gewindeteils und der Oberfläche der Schneckenantriebswelle (152) von dem unteren Ende zum oberen Ende der Schneckenantriebswelle konstant ist; einen auf den Beschickungsteil (150a) folgenden Komprimierungsteil (150b), wobei der Komprimierungsteil ein Teil ist, in welchem die Schneckenkanaltiefe graduell geringer wird; und einen auf den Komprimierungsteil (150b) folgenden Meßteil (150c), wobei der Meßteil (150c) ein Teil ist, in welchem die Schneckenkanaltiefe geringer und konstant ist als diejenige im Beschickungsteil (150a), und

das Verhältnis der Länge des Beschickungsteils (150a) zur Schneckennutzlänge der Schneckenantriebswelle (152) fällt in den Bereich von 0,43 bis 0,55, das Verhältnis der Länge des Komprimierungsteils (150b) zur Schneckennutzlänge fällt in den Bereich von 0,20 bis 0,30, das Verhältnis der Länge des Meßteils (150c) zur Schneckennutzlänge fällt in den Bereich von 0,20 bis 0,40, und die Summe der Verhältnisse ist 1,0,

(2): die obere Grenze der Zylindertemperatur des Beschickungsteils (150a) fällt in den Bereich von 4°C bis zu einer Temperatur, welche 20°C höher ist als der Schmelzpunkt des Metaxylylengruppen-enthaltenden Polyamids (B), und die Zylindertemperaturen des Komprimierungsteils (150b) und des Meßteils (150c) fallen in den Bereich von (i) einer Temperatur, welche 30°C niedriger ist als der Schmelzpunkt des Metaxylylengruppen-enthaltenden Polyamids (B) bis zu (ii) einer Temperatur, welche 20°C höher ist als der Schmelzpunkt des Metaxylylengruppen-enthaltenden Polyamids (B), und

(3): die festgelegte Schergeschwindigkeit ist 14/Sekunde oder mehr.

2. Das Verfahren gemäß Anspruch 1, wobei im Einwellenextruder (100) die Form der Schnecke die folgenden Bedingungen (1) - (3) erfüllt,

in Bedingung (1) fällt das Verhältnis der Schneckennutzlänge L zum Durchmesser D des oberen Endes des Gewindeteils (154) (L/D-Verhältnis) in den Bereich von 22 bis 32,

in Bedingung (2) fällt die Schneckenkanaltiefe h2 des Beschickungsteils (150a) in den Bereich von 0,1 bis 0,3D,

in Bedingung (3) fällt das Komprimierungsverhältnis in den Bereich von 2,3-3,5, und das Komprimierungsverhältnis ist das Verhältnis der Querschnittsfläche des Beschickungsteils (150a) zu der des Meßteils (150c).

3. Das Verfahren gemäß Anspruch 1 oder 2, wobei das Metaxylylengruppen-enthaltende Polyamid (B) eine Diamineinheit enthält, die 70 mol% oder mehr einer Metaxylylen-Diamineinheit enthält, und eine Dicarbonsäureeinheit, die 50 mol% oder mehr einer $\alpha,\omega$-aliphatischen Dicarbonsäureeinheit enthält.

4. Das Verfahren gemäß Anspruch 1 oder 2, wobei die relative Viskosität des Metaxylylengruppen-enthaltenden Polyamids (B) 2,0-4,5 beträgt.

5. Das Verfahren gemäß Anspruch 1 oder 2, wobei die Schmelzflussrate (MFR) des Polyolefins (A) in den Bereich von 0,03 g/10 Minuten oder mehr (Last: 2,16 kgf, Temperatur: 190°C) und 2 g/10 Minuten oder weniger (Last: 2,16 kgf, Temperatur: 190°C) fällt.

6. Das Verfahren gemäß einem der Ansprüche 1 bis 5, wobei das Formteil ein durch Direktblasformen erhaltener hohler Behälter ist.

7. Das Verfahren gemäß einem der Ansprüche 1 bis 5, wobei das Formteil eine durch Breitschlitzdüse-Walzenkühlung erhaltene Bahn ist.

**Revendications**

1. Méthode de production d'un article moulé comprenant une composition de résine, dans laquelle un mélange brut est obtenu par mélange de 40 à 90 parties en poids d'une polyoléfine (A), de 3 à 30 parties en poids d'un polyamide contenant un groupe métaxylylène (B), et de 3 à 50 parties en poids d'une polyoléfine adhésive (C),

et la composition de résine est produite à l'aide d'une extrudeuse à un seul arbre (100) qui comprend :

une vis (150) comportant un arbre de vis (152) et une partie filetage (154) formée en spirale sur le côté de l'arbre de vis (152), la partie filetage (154) acheminant la composition de résine depuis l'extrémité de base jusqu'à l'extrémité supérieure de l'arbre de vis (152) par rotation de l'arbre de vis (152) ;
un cylindre (140) doté d'une face circonférentielle intérieure (142) ayant une forme de face intérieure cylindrique, la vis (150) étant insérée de manière rotative dans le cylindre (140) ;
des contrôleurs de température qui ajustent la température de la composition de résine acheminée depuis l'extrémité de base jusqu'à l'extrémité supérieure par rotation de la vis (150) ; et
un dispositif d'entraînement de vis (170) qui entraîne la vis (150) en rotation à une vitesse de cisaillement prédéfinie,

**caractérisée en ce que**
l'extrudeuse à arbre unique (100) satisfait en outre la condition (1) suivante, et **en ce que** le mélange brut est porté à fusion et mélangé dans les conditions (2) et (3) suivantes :

(1) : l'arbre de vis (152) comprend : une partie alimentation (150a) qui est une partie dans laquelle la profondeur du filet de vis entre l'extrémité de pointe de la partie filetage et la surface de l'arbre de vis (152) depuis l'extrémité de base jusqu'à l'extrémité supérieure de l'arbre de vis (152) est constante ; une partie compression (150b) faisant suite à la partie alimentation (150a) qui est une partie dans laquelle la profondeur du filet de vis va décroissant; et une partie mesure (150c) faisant suite à la partie compression (150b), la partie mesure (150c) étant une partie dans laquelle la profondeur du filet de vis est plus courte et constante que celle de la partie alimentation (150a), et
le rapport de la longueur de la partie alimentation (150a) à la longueur de vis effective de l'arbre de vis (152) s'inscrit dans la plage de 0,43 à 0,55, le rapport de la longueur de la partie compression (150b) à la longueur de vis effective (152) s'inscrit dans la plage de 0,20 à 0,30, le rapport de la longueur de la partie mesure (150c) à la longueur de vis effective s'inscrit dans la plage de 0,20 à 0,40, et la somme des rapports est de 1,0,
(2) : la limite haute de la température de cylindre de la partie alimentation (150a) s'inscrit dans la plage de 4 °C à une température qui est de 20 °C supérieure au point de fusion du polyamide contenant un groupe métaxylylène (B), et les températures de cylindre de la partie compression (150b) et de la partie mesure (150c) s'inscrivent dans la plage de (i) une température qui est de 30 °C inférieure au point de fusion du polyamide contenant un groupe métaxylylène (B) à (ii) une température qui est de 20 °C supérieure au point de fusion du polyamide contenant un groupe métaxylylène (B), et
(3) : la vitesse de cisaillement prédéfini est de 14/seconde ou plus.

2. Méthode selon la revendication 1, dans laquelle dans l'extrudeuse à arbre unique (100), la forme de la vis satisfait les conditions (1) à (3) suivantes,
dans la condition (1), le rapport de la longueur de vis effective L au diamètre D de l'extrémité supérieure de la partie filetage (154) (rapport L/D) s'inscrit dans la plage de 22-32,
dans la condition (2), la profondeur du filet de vis h2 de la partie alimentation (150a) s'inscrit dans la plage de 0,1 à 0,3D,
dans la condition (3), le taux de compression s'inscrit dans la plage de 2,3 à 3,5, et le taux de compression est le rapport de la coupe transversale de la partie alimentation (150a) à celle de la partie mesure (150c).

3. Méthode selon la revendication 1 ou 2, dans laquelle le polyamide contenant un groupe métaxylylène (B) contient un motif diamine comprenant 70 % en mol ou plus d'un motif métaxylylène diamine et un motif acide dicarboxylique comprenant 50 % en mol ou plus d'un motif acide dicarboxylique $\alpha,\omega$-aliphatique.

4. Méthode selon la revendication 1 ou 2, dans laquelle la viscosité relative du polyamide contenant un groupe métaxylylène (B) est de 2,0 à 4,5.

5. Méthode selon la revendication 1 ou 2, dans laquelle l'indice de fluidité à chaud (MFR) de la polyoléfine (A) s'inscrit dans la plage de 0,03 g/10 minutes ou plus (charge : 2,16 kgf, température : 190 °C) et 2 g/10 minutes ou moins (charge : 2,16 kgf, température : 190 °C).

6. Méthode selon l'une quelconque des revendications 1 à 5, dans laquelle l'article moulé est un récipient creux obtenu par moulage par soufflage direct.

**7.** Méthode selon l'une quelconque des revendications 1 à 5, dans laquelle l'article moulé est une feuille obtenue par refroidissement sur rouleau de filière en T.

Fig.1

**EP 2 647 483 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 60006735 A
- JP 6328634 A
- JP 55121017 A
- JP 58209562 A
- JP 2005206806 A
- JP 2007177208 A